(19) Europäisches Patentamt
European Patent Office
Office européen des brevets

(11) **EP 1 760 709 A1**

(12) **EUROPEAN PATENT APPLICATION**

(43) Date of publication:
**07.03.2007 Bulletin 2007/10**

(21) Application number: **06254506.6**

(22) Date of filing: **30.08.2006**

(51) Int Cl.:
***G11B 7/26*** *(2006.01)* ***G11B 7/24*** *(2006.01)*
***G11B 7/252*** *(2006.01)* ***G11B 7/0065*** *(2006.01)*

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(30) Priority: **01.09.2005 JP 2005253565**

(71) Applicant: **Fuji Photo Film Co., Ltd.**
**Minami-Ashigara-Shi, Kanagawa (JP)**

(72) Inventors:
- **Nagate, Hiroshi,**
  **c/o Fuji Photo Film Co., Ltd.**
  **Fujinomiya-shi**
  **Shizuoka (JP)**
- **Usami, Yoshihisa,**
  **c/o Fuji Photo Film Co., Ltd.**
  **Fujinomiya-shi**
  **Shizuoka (JP)**

(74) Representative: **Stevens, Jason Paul**
**Frank B. Dehn & Co.**
**St Bride's House**
**10 Salisbury Square**
**London EC4Y 8JD (GB)**

(54) **Optical information recording media and method for manufacturing them**

(57) An optical information recording medium having a holographic recording layer (32) between a first substrate (1) and a second substrate (5) in which optical information is holographically recorded and a method for manufacturing the recording medium are described. The recording medium comprises a disk-shaped recording sheet having a spindle hole which comprises a holographic recording layer, and other layers as appropriate, laminated between disk-shaped first and second substrates having spindle holes.

*Fig. 1*

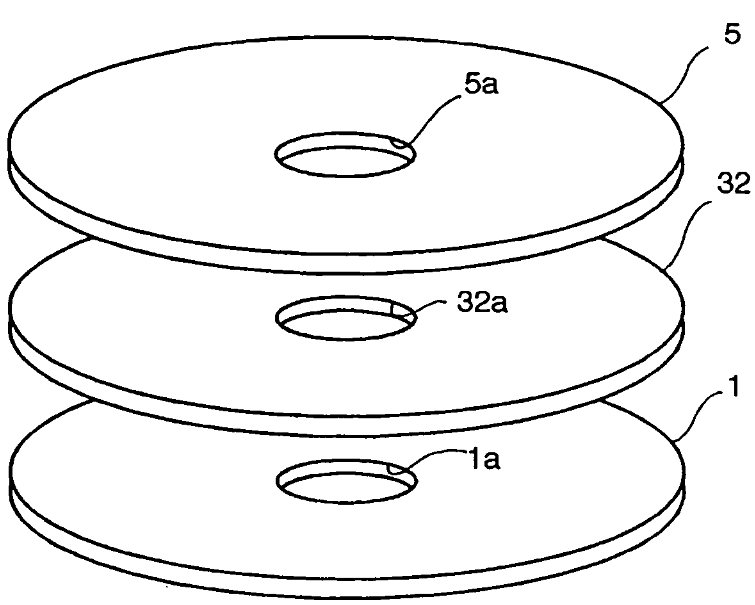


EP 1 760 709 A1

## Description

The present invention relates to media suitable for use in optical information recording by using holography and a method for manufacturing the optical information recording media.

Optical information recording media have been known as one of large-capacity recording media available for recording a mass of data such as high density image data. While rewritable optical media such as a magnetic optical disk and a phase change optical disk and recordable optical media such as CD recordable (CD-R) have been in practical use, there is a strong demand for large-capacity optical information recording media. However, conventional optical information recording media are used for two-dimensional recording, and there is a definite ceiling to a capacity increase. Therefore, in recent years, holographic recording media are remarked as favourable to three-dimensional recording.

Holographic optical recording is generally performed by superposing information-bearing light carrying image information that has a two-dimensional intensity distribution and reference light that is uniform in intensity so as to generate interference fringes inside an optical information recording medium, thereby recording the optical information in the form of an optical characteristic distribution in the optical information recording medium. In order to reproduce or play back the optical information, reference light is applied to the optical information recording medium so as to be diffracted by the interference fringes and then to outgo as reproducing light having an intensity distribution corresponding to the optical characteristic distribution.

The holographic recording is capable of recording optical characteristic distributions three-dimensionally therein and, in consequence, capacitated for multiplex recording, i.e. to partly superpose areas where information are recorded by separate information-bearing light. When employing the multiplex recording in the digital volume holography, it is possible to reproduce original information with a high degree of fidelity despite of an inferior signal to sound ratio (SN ratio). This is because an SN ratio for one spot is considerably enhanced. Consequentially, it is possible to perform hundreds of times of multiple recording, so that a greater storage capacity can be obtained in the optical information recording medium as known from, for example, Publication of Japanese Patent Application No. 2002-123949.

Figure 9 shows a prior art holographic type of optical information recording medium described in, for example, Publication of Japanese Patent Application No. 11-311936. This optical information recording medium comprises a second substrate 1 having a plurality of radial linear servo pit patterns 3, a reflective layer 2 made of, for example, an aluminium film formed over the second substrate 1, a holographic recording layer 4 and a first substrate 5 over the holographic recording layer 4 formed in this order. This optical information recording medium is generally manufactured by bonding inner and outer annular spacers to a disk-shaped second substrate, applying a bonding adhesive onto surfaces of the inner and outer annular spacers, and then bonding a disk-shaped first substrate to the inner and outer annular spacers so as thereby to form an overlapped structure having a cell therein. Subsequently, a holographic recording material is infused into the cell through an inlet formed in the outer annular spacer and then cured to form an optical recording layer.

However, a problem that is encountered by the optical information recording medium is deterioration in quality of the holographic recording layer due to moisture permeating into the optical information recording medium through a gap between the spacers and the substrate. Further, there is the requirement that the manufacturing process should be simplified for a reduction in manufacturing cost.

There has been proposed a holographic optical information recording medium in, for example, Publication of Japanese Patent Application No. 2004-29476. This optical information recording medium has a structure which has a holographic recording layer containing a photo-curable organic material, the holographic recording layer including an outer marginal part not involved in holographic recording that has been cured with ultraviolet light. However, since the cured holographic recording layer is in a gel resin state, it is uneven in thickness between an inner marginal part and an outer marginal part due to resin contraction and external stress. Consequentially, the holographic optical information recording medium encounters uneven recording performance and deterioration in the degree of multiplexing. In addition, since the holographic recording layer includes a semi-exposed area between a photo-cured area and an unexposed area, it is unclear where a boundary between areas available and unavailable for recording of the holographic recording layer is, so that it is impossible to figure out an accurate storage capacity of the optical information recording medium.

Consequentially, considerable emphasis is placed on the development of a holographic optical information recording medium that is capable of recording high density image, assembled in a decreased number of steps and has an even thickness of optical recording layer and also on a method for efficiently manufacturing the holographic optical information recording medium by means of forming the holographic optical information recording medium in a specified thickness before assembling the holographic optical information recording medium in place of conventionally curing the optical recording layer with ultraviolet light during assembling the holographic optical information recording medium.

It is an object of at least the preferred embodiments of the present invention to provide an optical information recording medium which is manufactured in a reduced number of assembling steps, has an uniform thickness of optical information recording layer and is capable of recording a high density optical image.

It is another object of at least the preferred embodiments of the present invention to provide a method for

efficiently manufacturing the optical information recording media.

In accordance with one aspect of the present invention, the foregoing objects are accomplished by a method for manufacturing an optical information recording medium having a holographic recording layer between a first substrate and a second substrate in which optical information is holographically recorded which comprises the steps of preparing a first substrate and a second substrate each of which is shaped in the form of a disk having a spindle hole, forming a disk-shaped recording sheet having a spindle hole which comprises a holographic recording layer, and forming a lamination of the disk-shaped recording sheet between the first substrate and the second substrate.

The disk-shaped recording sheet may be prepared by forming the holographic recording layer on a support, punching out the support with the holographic recording layer formed thereon into a disk having a spindle hole, and peeling off the holographic recording layer from the support, or may be prepared by casting a liquid of photosensitive composition material into a casting mould having a core mandrel, curing the liquid of photosensitive composition material in the moulding cavity and removing a moulding from the mould cavity, or otherwise, may be prepared by forming a cylindrical rod of photosensitive composition material having a centre bore and slicing the cylindrical rod of photosensitive composition material into disk sheets.

It is desirable to fit the disk-shaped recording sheet between an annular outer spacer and an annular inner spacer and then forming a lamination of the spacer fitted recording sheet in between the first and second substrates.

In accordance with another aspect of the present invention, the foregoing objects are accomplished by an optical information recording medium which comprises a disk-shaped first substrate having a spindle hole, a disk-shaped second substrate having a spindle hole, and a disk-shaped recording sheet having a spindle hole comprising a holographic recording layer which has a thickness preferably in a range of from 100 to 2,000 μm, wherein the disk-shaped recording sheet is laminated between the first and second substrates.

The disk-shaped recording sheet may be prepared by punching out a support on which a lamination of a plurality of the holographic recording layers are formed into a disk having a spindle hole, or by casting a liquid of photosensitive composition material into a casting mould having a core mandrel and curing the liquid of photosensitive composition material in the moulding cavity, or, otherwise, by forming a cylindrical rod of photosensitive composition material having a centre bore and slicing the cylindrical rod of photosensitive composition material into disk recording sheets.

The optical information recording medium may further comprise an annular outer spacer and an annular inner spacer between which the disk-shaped recording sheet is fitted in. In addition, the optical information recording medium may further comprise a filter layer formed between the second substrate and the disk-shaped recording sheet.

The optical information recording medium is used preferably with a collinear holographic recording method.

The foregoing and other objects and features of the present invention will be clearly understood from the following detailed description when read with reference to the accompanying drawing, wherein the same reference numerals are used to denote the same or similar parts throughout the drawings and in which:

Figure 1 is a schematic perspective view showing a lamination of a disk-shaped recording sheet between substrates according to an embodiment of the present invention;

Figure 2 is a schematic perspective view showing formation of a disk-shaped recording sheet by punch-cutting;

Figure 3 is a schematic perspective view showing formation of a disk-shaped recording sheet by fluid moulding;

Figure 4 is a schematic perspective view showing formation of a disk-shaped recording sheet by slicing a cylindrical rod of holographic recording medium;

Figure 5 is a schematic exploded view showing a lamination of an optical information recording medium comprising a spacer-sealed disk-shaped recording sheet;

Figure 6 is a perspective view, partially in section, of an optical information recording medium according to an embodiment of the present invention;

Figure 7 is a conceptual diagram showing a method for holographically recording an optical information recording medium of the present invention;

Figure 8 is a sectional view of an optical information recording medium according to another embodiment of the present invention;

Figure 9 is a schematic sectional view of a prior art holographic information recording medium;

Figure 10 is a schematic sectional view of an optical information recording medium of example 1 of the present invention;

Figure 11 is a schematic sectional view of an optical information recording medium of example 2 of the present invention;

Figure 12 is a graphic diagram showing a reflective characteristic of a filter comprising a lamination of three cholesteric liquid crystal layers with respect to wavelength of a beam incident upon the filter at an angle of 0˚;

Figure 13 is an explanatory view of an optical system of a holographic information recording and reproducing apparatus around an optical information recording medium; and

Figure 14 is a block diagram illustrating an overall structure of an optical information recording and reproducing

apparatus.

An optical information recording medium of the present invention will be described as taking the form of a disk having a centre spindle hole.

(Method for manufacturing an optical information recording medium)

A method for manufacturing an optical information recording medium of the present invention comprises basically at least the steps of preparing a disk-shaped recording sheet and forming a disk-shaped lamination of the recording sheet between substrates, and may further comprise other steps as appropriate.

<Formation of recording sheet>

The disk-shaped recording sheet preparation step is a step of preparing a disk-shaped recording sheet having a centre spindle hole which comprises a holographic recording layer. The disk-shaped recording sheet is not bounded by method and may be manufactured by any methods known in the art according to purposes or applications of the optical information recording medium. Examples of the method include punch-cutting, fluid moulding, cylindrical rod slicing, cast formation, extrusion moulding, etc. It is desirable to employ the punch-cutting method among them for the reason that it is liable to form a cured recording layer uniformly in thickness from the viewpoint of finishing it to a given shape afterwards.

-Punch-cutting method-

The punch-cutting method is a method of punching out a disk-shaped recording sheet from a support sheet on which a holographic recording layer of a photosensitive composition has been formed and cured. Specifically, as shown in Figure 2, a disk-shaped recording sheet 32 having a centre spindle hole 32a is punched out from the support sheet with a recording layer formed thereon by means of a punch-cutting die 34.

--Support sheet--

The support sheet is not bounded by shape, structure and size and may be selected from sheets widely used as a support sheet known in the art according to purposes or applications of the optical information recording medium. Specifically, the support sheet may be designed in shape appropriately according to applications of the optical information recording medium. It is desirable that the support sheet is formed in the shape of a disk, a card, a tablet or a web. It is also desirable that the support sheet has a single layer structure or a laminated structure. The support sheet may have sizes depending upon purposes or applications of the optical information recording medium.

The support sheet is not bounded by material and may be made of a material, organic or inorganic. Examples of the inorganic material for the support sheet include glass, quartz, silicone, etc. Examples of the organic material for the support sheet include acetate resins such as triacetylcellulose, polyester resins, polyethersulfone resins, polysulfone resins, polycarbonate resins, polyamide resins, polyimide resins, polyolefin resins, acrylic resins, polynorbornen resins, cellulosic resins, polyallylate resins, polystyrene resins, polyvinyl alcohol resins, polyvinyl chloride resins, polyvinyliden chloride resins, polyacrylic resins, polylactic resins, plastic film laminated paper, synthetic paper, etc. These materials may be used individually or in any combination of two or more. It is desirable to employ polynorbornen resins or acrylic resins among them in view of formability, releasability and cost. The support sheet may be synthesized or selected from products on the market.

The support sheet is also not bounded by thickness and may have any thickness according to purposes or applications of the optical information recording medium. It is desirable that the support sheet has thickness preferably in a range of from 5 to 100 $\mu$m, and more preferably in a range of from 20 to 80 $\mu$m. The support sheet possibly causes a problem of curling due to contractive stress of the holographic recording layer which occurs during coating and curing the holographic recording layer if the lower limit of 5 $\mu$m is exceeded and encounters a problem of driving up costs if the upper limit of 100 $\mu$m is exceeded.

--Lamination of recording layer--

The lamination of recording layer is not bounded by method and may be performed by any methods known in the art according to purposes or applications of the optical information recording medium. One preferred method is wet coating in which a solution of a material for the holographic recording layer dissolved or dispersed in a solvent is spread or coated and dried. The wet coating is not bounded by type and may be performed by any types known in the art

according to purposes or applications of the optical information recording medium. Examples of the type of wet coating include inkjet coating, spin coating, kneader coating, bar coating, blade coating, cast coating, dip coating, curtain coating, etc..

The recording layer is not bounded by thickness and may be designed in any thickness preferably in a range from 1 to 2,000 μm, and more preferably in a range of from 100 to 1,000 μm, according to purposes or applications of the optical information recording medium. The holographic recording layer provides a sufficient S/N (signal-to-noise) ratio when having a thickness within that preferred range, and a more enhanced S/N ratio when having a thickness within that more preferred range, even in the case where a 10 to 300 multiple shift recording is made.

--Curing of holographic recording layer--

Curing of holographic recording layer is not bounded by method as long as using heat treatment and may be performed by any methods known in the art according to purposes or applications of the optical information recording medium. For example, the holographic recording layer is heated for curing at a temperature between 40 and 100˚C for a period between 30 and 360 mins. The problem encountered by the holographic recording layer is that cross-linkage of photopolymers proceeds weakly and is not completed or does not proceed if the heating temperature is lower than 40˚C or that the holographic recording layer decreases its holographic sensitivity due to polymerization of monomers of the holographic recording layer if the heating temperature is higher than 100˚C. The reason for not using ultraviolet curing but using heat curing is that the holographic recording layer decreases its holographic sensitivity due to an occurrence of photopolymerization of monomers through ultraviolet curing.

—Punch-cutting—

The cured holographic recording layer is separated from the support sheet as a holographic recording sheet and then punch-cut into a disk-shaped holographic recording sheet. The separation of the cured holographic recording layer is not bounded by method nor by device and may be separated by any methods and devices known in the art according to purposes or applications of the optical information recording medium. One of available methods is a method of partly peeling an edge of the holographic recording layer off from the support sheet using an adhesive tape or an ultrasonic wave and, subsequently, peeling the holographic recording layer entirely from the support sheet taking the peeled edge as a trigger.

The holographic recording sheet is not bounded by size and may have any sizes according to purposes or applications of the optical information recording medium. It is desirable that the disk-shaped holographic recording sheet has a diameter preferably in a range of from 80 to 120 mm, and more preferably in a range of from 110 to 118 mm, for an optical information recording medium in the form of a disk having a diameter of 120 mm. The holographic recording sheet provides a reduced available recording area which leads to a reduced recording capacity and causes deterioration in parallelism along an outer marginal rim of the optical information recording medium due to a short stretch of the holographic recording sheet if having a diameter smaller than 80 mm and, on the other hand, runs over the optical information recording medium if having a diameter larger than 120 mm. It is also desirable that the disk-shaped holographic recording sheet has a centre spindle hole having a diameter preferably in a range of from 15 to 60 mm, and more preferably in a range of from 20 to 40 mm, for a centre spindle hole having a diameter of 15 mm of the optical information recording medium in the form of a disk. The holographic recording sheet runs over the optical information recording disk and, in consequence, hinders insertion of a spindle into the centre spindle hole of the optical information recording medium if having a centre spindle hole having a diameter smaller than 15 mm and, on the other hand, provides a reduced available recording area which leads to a reduced recording capacity and causes deterioration in parallelism along an inner marginal rim of the optical information recording medium due to a short stretch of the holographic recording sheet if having a diameter larger than 60 mm.

The punch-cutting die is not bounded by type and may take a type such as a metal cutting die, a wooden cutting die, a round cutting die, an ultrasonic cutting die, a laser cutting die, etc. according to purposes or applications of the optical information recording medium. It is desirable to employ a metal die, an ultrasonic cutting die or a laser cutting die among them in view of dimensional cutting accuracy.

The punch-cutting is not bounded by method and may be performed by any methods known in the art according to purposes or applications of the optical information recording medium. For example, the holographic recording sheet is punched out by moving a cutting die down in parallel and pressing the cutting blade against the holographic recording sheet placed on an anvil block having a cutting-edge so as to cut it into a disk shape. It is more desirable to employ ultrasonic cutting or laser cutting which is capable of cutting out a holographic recording sheet without flashes on its outer and inner edges. In these ways, the holographic recording sheets are finished into a given disk shape uniform in thickness and size precisely and manufactured efficiently in large quantities.

The holographic recording sheet is not bounded by thickness and may depend on purposes or applications of

the optical information recording medium. It is desirable that the holographic recording sheet has a thickness preferably in a range of from 100 to 2,000 μm, more preferably in a range of from 100 to 1,000 μm, and most preferably in a range of from 400 to 800 μm. The holographic recording sheet exerts restraints on the degree of multiplexing if having a thickness less than 100 μm and, on the other hand, encounters deterioration in S/N ratio due to an increase in light scattering during holographic recording/reproducing. The thickness measurement of the holographic recording sheet is not bounded by measuring device and may be performed by any measuring devices known in the art according to purposes or applications of the optical information recording medium. Examples of the measuring device include a slide calliper, a micrometer, a laser thickness meter, etc.

—Fluid moulding method—

The fluid moulding is performed by pouring a liquid of a photosensitive composition into a moulding die and then curing it in the form of holographic recording sheet. Specifically, as shown in Figure 3, the fluid moulding is carried out by the use of a casting mould 35 having a disk-shaped mould cavity 35a substantially equal in depth to a thickness of the holographic recording sheet 32 and a round centre boss 35b. Even though the mould cavity 35a has a depth greater than a given thickness of the holographic recording sheet 35, it is enabled to provide a holographic recording sheet 35 having the given thickness through quantitative control of the liquid of photosensitive composition to be poured into the mould cavity 35a. It is absolutely essential to dispose the casting mould 35 in a horizontal position with respect to a direction of gravity. The uniformity of thickness of the holographic recording sheet depends on a horizontal position of the casting mould 35.

After having poured the liquid of photosensitive composition sufficiently enough to fill the mould cavity 35a of the casting mould 35, an excess part of the liquid of photosensitive composition is removed by, for example, a putty knife so that the liquid of photosensitive composition comes level with the top surface of the casting mould 35.

It is desirable that the liquid of photosensitive composition has viscosity in a temperature range of from 30˚C to 40˚C (which is hereinafter referred to as 30-40 viscosity) preferably in a range of from 50 to 10,000 mPa·s, and more preferably in a range of from 100 to 3,000 mPa·s. It takes a long time to complete a cured holographic recording layer if the liquid of photosensitive composition has a 30-40 viscosity less than the lower limit of 50 mPa· s and, on the other hand, is possibly difficult to flow into the mould cavity 35a in strict accordance with it if the liquid of photosensitive composition has a 30-40 viscosity greater than the upper limit of 10,000 mPa· s. The liquid of photosensitive composition may be cured by the same manner as described in connection with the holographic recording sheet that is punch-cut into a disk-shaped holographic recording sheet.

After having cured the liquid of photosensitive composition, the cured holographic recording layer is removed from the casting mould so as thereby to provide a disk-shape holographic recording sheet. In order to remove the disk-shaped holographic recording layer from the casting mould with high accuracy and infallibly, the mould cavity 35a may be previously applied with a silicone type or a fluorochemical type of releasing agent. It is desirable that the holographic recording sheet thus prepared has the same size and hardness as that prepared by the punch-cutting.

—Slicing method—

Disk-shaped holographic recording sheets can be produced by slicing a cylindrical rod material having a centre bore into equal disk-shaped parts. Specifically, as shown in Figure 4, a cylindrical rod material 36 having a centre bore 36a is prepared by casting a liquid of photosensitive composition into a cylindrical casting mould having a core mandrel (not shown) and curing it at a high temperature. The cured cylindrical rod material 36 is pulled out from the cylindrical casting mould and sliced into holographic recording sheets 32 having centre spindle holes 32a in a thickness range of from 100 to 2,000 μm. Curing of the cylindrical rod material 36 may be performed by the same manner as described in connection with the holographic recording sheet that is punch-cut into a disk-shaped holographic recording sheet. It is desirable that the holographic recording sheet thus prepared has the same thickness, size and hardness as that prepared by the punch-cutting.

When casting the liquid of photosensitive composition into the cylindrical casting mould, it is desirable to cast the liquid of photosensitive composition into the cylindrical casting mould in vacuum so as to prevent it producing bubbles therein. Since the liquid of photosensitive composition is apt to produce bubbles therein, particularly, in the case where a large amount of it is cast, it is desirable to perform degassing of the liquid of photosensitive composition so as thereby to approximate specific humidity of the liquid of photosensitive composition of 0 and is also desirable to prevent moisture from getting mixed therein during casting of the liquid of photosensitive composition into the cylindrical casting mould.

In order to prevent the liquid of photosensitive composition from producing bubbles therein, it is desirable that the liquid of photosensitive composition has a 30-40 viscosity preferably in a range of from 50 to 10,000 mPa· s, and more preferably in a range of from 100 to 3,000 mPa·s. The liquid of photosensitive composition possibly takes a long time to cure if the lower limit of 50 mPa· s is exceeded and, on the other hand, is too thick to flow into the mould cavity

in strict accordance with it if the upper limit of 10,000 mPa·s is exceeded. Further, in order to pull out the cylindrical solid rod material 36 from the cylindrical casting mould with high accuracy, the cylindrical casting mould may be coated with a silicone type or a fluorochemical type of releasing agent on its inner wall.

<Process for forming a lamination of holographic recording layer>

The process of forming a lamination of the holographic recording sheet includes at least a step of sandwiching the disk-shaped holographic recording sheet between first or top and second or bottom disk-shaped substrates, and besides other steps if needed.

—Formation of lamination—

The lamination of the holographic recording sheet is performed by sandwiching the disk-shaped holographic recording sheet, and other layers as appropriate, between first and second substrates. The lamination of the holographic recording sheet is not bounded by method and may be accomplished by any method known in the art such as adhesive laminating, pressure laminating without using an adhesive, laminating by the use of spacers, vacuum laminating, etc. The adhesive laminating method comprises at least the steps of piling a first substrate, an interlayer adhesive coating, a holographic recording sheet, an interlayer adhesive coating and a second substrate one on top of another in this order in shipshape manner and exercising a pressure between 0.001 and 1.0 MPa on them from above at an ambient temperature between 40 and 100°C so as thereby to adhere them. It is desirable to complete the lamination in a vacuum in order to remove bubbles therefrom.

-Adhesive-

The adhesive is not bounded by type and may be selected appropriately from various known adhesives such as epoxy adhesives, acrylic adhesives, urethane adhesives, rubber adhesives, emulsion adhesives, etc. It is desirable to use epoxy adhesives in light of transparency and adhesiveness.

The pressure laminating method without using an adhesive allows a lamination of the first substrate, the holographic recording sheet and the second substrate through the use of adhesivity of the holographic recording sheet itself. Specifically, the first substrate, the holographic recording sheet and the second substrate are piled one on top of another in this order in shipshape manner and pressed from above by a pressure between 0.001 and 1.0 MPa at an ambient temperature between 20 and 80°C. It is desirable to perform the lamination in a vacuum in order to remove bubbles. In the case where the disk-shaped holographic recording sheet made by the punch-cutting method is used, it is allowed to form a lamination by sandwiching the disk-shaped holographic recording layer left formed on the support sheet between the first and the second substrate. In this case, the support sheet is closely adhered with a filter layer comprising a wavelength selective reflective layer so as to double advantageously as a first gap layer which will be described later. Also, when closely adhering the support sheet to the first substrate, the support sheet prevents the first substrate from encountering the issue that polycarbonate, a major constituent of the first substrate, is dissolved by a solvent chemistry of a photopolymer as a major component of the holographic recording layer.

-Spacer-sealed lamination-

The spacer-sealed lamination enables to form a lamination of the holographic recording sheet by the use of inner and outer annular spacers. The usage of the annular spacers provides significant improvement in the accuracy of thickness of the lamination which leads to a precise optical information recording medium having a fine thickness and, furthermore, offers such an advantage that the optical information recording medium is protected from infiltration of water and harmful gases and aridity of the holographic recording layer.

Specifically, as shown in Figure 5, the spacer-sealed laminating method comprises the steps of placing an outer annular spacer 37 and an inner annular spacer 38 on the second substrate 1, fitting the holographic recording sheet 32 in the outer annular spacer 37 and the inner annular spacer 38 in the centre spindle hole 32a of the holographic recording sheet 32, and then placing the first substrate 5 over the outer and the inner annular spacers 37 and 38. When aligning the outer surfaces of the first and second substrates 5 and 1 and the outer annular spacer 37, inner surfaces of the centre spindle holes 5a and 1a of the first and second substrates 5 and 1 and the inner annular spacer 38 are fitly aligned. It is desirable to align them with accuracy within a diametrical displacement less than 100 μm. If the diametrical displacement is greater than 100 μm, the holographic recording sheet 32 possibly moves between the outer and inner annular spacers 37 and 38. In light of ensuring the desired alignment accuracy, it is required to finish the substrates 1 and 5 and the holographic recording sheet to an outer diameter with a tolerance less than 100 μm. The lamination thus prepared is integrated with an adhesive or by bonding under pressure in a range of from 0.001 to 10

Mpa at a temperature in a range of from 20 to 100˚C.

The outer and inner annular spacers 37 and 38 are required to have the same thickness as the holographic recording sheet 32. If there is a difference between them, the holographic recording sheet 32 is not flush with the annular spacers 37 and 38, there occurs a step therebetween. The formation of such a step builds up an air gap within the optical information recording medium which has an adverse effect on optical characteristics and recording performance of the optical information recording medium, resulting in deterioration in quality of the optical information recording medium. The difference in thickness between the annular spacers and the holographic recording sheet step depending on which the step occurs is desirably less than 100 μm. If the difference in thickness exceeds 100 μm, the step becomes large and, as a result, increases a marginal slant of the holographic recording sheet. This makes it impossible to record information on the optical information recording medium, to reproduce information from the optical information recording medium, and to apply servo control. In order to eliminate formation of an air gap, it is effective to fill the step with a transparent resin or to apply an adhesive rather thick so as to fill the step.

The annular spacer is not bounded by material and may be made of any materials known in the art according to purposes or applications of the optical information recording medium. For example, the annular spacer may be made of the same material as the support sheet used for preparing the holographic recording sheet. The annular spacer is not bounded by manufacturing method and may be manufactured by any methods known in the art according to purposes or applications of the optical information recording medium. Examples of the manufacturing method include injection moulding, blow moulding, compression moulding, vacuum moulding, cutting, etc.

<Other processes>

The lamination process may include other processes, such as reflective layer forming, filter layer forming, first gap forming, second gap forming, etc., according to purposes or applications of the optical information recording medium.

-Formation of reflective layer-

The reflective layer, that is formed over patterned servo pits on the bottom substrate, is made of a material having a high reflectivity for both information-bearing light and reference light. It is desirable to use Al, an Al alloy, Ag or an Ag alloy when employing information and reference light in a wavelength band of from 400 to 780 nm, or Al, an Al alloy, Ag, an Ag alloy, Au, A Cu alloy or TiN when employing information and reference light having wavelengths longer than 650 nm.

The reflective layer may be composed of a dye type holographic recording layer such as used for DVD (Digital Video Disk) so that the optical information recording medium is made capable of writing or rewriting directory information such as a hologram recorded area, a rewritten time, an error location, an alteration proceeding and the like in the reflective layer and erasing them using red laser light without having an effect on hologram in the holographic recording layer, beside reflecting red laser light.

Formation of the reflective layer is not bounded by forming process and may be performed by various vapour-phase growth known in the art such as vacuum deposition, spattering, plasma chemical vapour deposition (CVD), photochemical vapour deposition (CVD), ion plating and electronic beam vapour deposition according to applications of the optical information recording medium. Among them, it is desirable to employ spattering in terms of commercial production adaptability and coating quality. The reflective layer has a thickness preferably greater than 50 nm and more preferably greater than 100 nm in terms of satisfactory reflectivity.

-Formation of filter layer-

The filter layer, that is formed as a filter having the same shape as an optical information recording medium such as a disk or a card and laminated to the second substrate by the use of an adhesive or an agglutinant, functions to transmit a specified wavelength of light, for example red light, (which is hereafter referred to as first light) and to reflect a specified wavelength of light different from the first light, for example green light, (which is hereafter referred to as second light). The filter layer has a thickness preferably in a range of from 1 to 30 μm and more preferably in a range of from 3 to 10 μm. Preferred examples of the filter layer is a dichroic mirror layer or a cholesteric liquid crystal layer. The cholesteric liquid crystal layer comprises at least a nematic liquid crystal compound and a chiral compound and, if necessary, a polymerizable monomer and other components. A preferred cholesteric liquid crystal layer has a function of circular polarized light separation. Such the cholesteric liquid crystal layer selectively reflects a circular polarized light component that the circular polarized light has a polarization direction coincide with a rotative direction of spiral of the liquid crystal and a wavelength coincide with the pitch of spiral of the liquid crystal. Therefore, the cholesteric liquid crystal layer is constructed such that it transmits circular polarized light having a specified wavelength (red light in this case) and reflects the remaining circular polarized light (green light), thereby separating two beams of circular polarized

light from available light in a specified band of wavelength utilizing the selective reflection feature.

It is desirable to set a cholesteric liquid crystal layer-bearing film on the second substrate. The cholesteric liquid crystal layer-bearing film is prepared by coating a cholesteric liquid crystal over a backing, orienting and solidifying the coated cholesteric liquid crystal and then punching out the backing into the same disk-shape as the retention recess of the second substrate. It is of course allowed to coat a cholesteric liquid crystal directly on the second substrate.

The filter layer is not bounded by forming method and may be cut by any methods known in the art according to purposes or applications of the optical information recording medium. Examples of the method for forming the filter layer include cutting-out by the use of a cutter, a punch-cutting die, etc. The filter layer is adhered to the substrate taking care not to allow bubbles to get into the adhesive.

The adhesive is not bounded by type and may be selected from various types known in the art according to purposes or applications of the optical information recording medium. Examples of the adhesive include UV cure adhesives, emulsion adhesives, one component adhesives, two component adhesives, etc.

The agglutinant is not bounded by type and may be selected from various types known in the art according to purposes or applications of the optical information recording medium. Examples of the adhesive include rubber agglutinants, acrylic agglutinants, silicone agglutinants, urethane agglutinants, vinyl alkyl ether agglutinants, polyvinyl alcohol agglutinants, polyvinyl pyrrolidone agglutinants, polyacrylamid agglutinants, cellulose agglutinants, etc.

The adhesive layer or the agglutinant layer is not bounded by coated thickness and may have any desired thickness according to purposes or applications of the optical information recording medium. In light of optical characteristics and lamellation, it is desirable that the adhesive layer has a coated thickness preferably in a range of from 0.1 1 to 10 μm and more preferably in a range of from 0.1 to 5 μm, and for the agglutinant layer to have a coated thickness preferably in a range of from 1 to 50 μm and more preferably in a range of from 2 to 30 μm.

In this instance, it is allowed to form the filter layer directly on the substrate depending on the circumstances. For example, it is possible to form a dielectric deposition layer over a colour material contained layer on the substrate and then a dielectric deposition layer formed over the colour material contained layer by spattering.

-Formation of first gap layer-

The first gap layer is formed between the filter layer and the reflective layer as appropriate in order to smooth out the top surface of the second substrate, and besides to adjust a size of a hologram produced in the holographic recording layer. Because it is required for the holographic recording layer to have a region where information-bearing and reference light interfere with each other and which is adjusted to a certain extent, it is effective to provide a gap between the holographic recording layer and the patterned servo pits. The first gap layer is not bounded by thickness and may have a thickness preferably in a range of from 1 to 200 μm according to purposes or applications of the optical information recording medium.

-Formation of second gap layer-

The second gap layer is formed between the filter layer and the holographic recording layer as appropriate. The second gap layer is not bounded by material and may be made of a transparent resin film or a norbornen resin film. Examples of such a film material include triacetylcellulose (TAC), polycarbonate (PC), polyethylene terephthalate (PET), polystyrene (PS), polysulfone (PSF), polyvinyl alcohol (PVA), methyl polymethacrylate-polymethylmethacrylate (PMMA), ARTON (trade name) which is produced by JSR and Zeonoa (trade name) which is produced by Nihon Zeon Co., Ltd. according to purposes or applications of the optical information recording medium. The second gap layer is not bounded by thickness and may have a thickness preferably in a range of from 1 to 200 μm according to purposes or applications of the optical information recording medium.

<Optical information recording medium>

The optical information recording medium of the present invention may be of a relatively thin planar hologram, transmissive type or reflective type, suitable for recording two dimensional information or a volume hologram, transmissive type or reflective type, suitable for recording a large quantity of information such as a three dimensional object. Further, from the viewpoint of recording type, the optical information recording medium may of an amplitude hologram, a phase hologram, a blazed hologram or a complex amplitude hologram. The optical information recording medium is available in two configurations, i.e. a first configuration for use with general holographic recording in which object or information-bearing light and reference light impinge on a holographic recording layer on a substrate in different directions and a second configuration for use with collinear recording in which object or information-bearing light and reference light impinge collinearly on a holographic recording layer formed on a substrate through a filter layer.

<< First configuration >>

The first configuration of optical information recording medium is not bounded by structure and may have any structures known in the art according to purposes or applications thereof. One example of the first configuration of optical information recording medium comprises a lamination of one or more holographic recording layers formed on a substrate or, as shown in Figure 8, comprises a holographic recording layer 41 between two substrates 42 and 43, each substrate 42, 43 being provided with an antireflective layer 44, 45 on its outer surface. In this instance, the first configuration of optical information recording medium may be provided with a gas barrier layer formed between the holographic recording layer 41 and each substrate 42, 43. Furthermore, the respective antireflective layers 44 and 45 may be covered with protective layers, respectively.

<Holographic recording layer>

The holographic recording layer, that is capable of recording optical information by the use of holography, varies optical characteristics such as optical absorptivity, refractive index or the like according to intensity of an electromagnetic wave having a specified wavelength (a gamma ray, an X-ray, an ultraviolet ray, a visual ray, an infrared ray, an electric wave, etc.) impinging thereon. The holographic recording layer contains a photopolymer and other constituent materials selected as appropriate.

-Photopolymer-

The photopolymer is not bounded by type and may be selected from various types known in the art according to purposes or applications of the optical information recording medium. Examples of the photopolymer include one capable of polymerizing resulting from polymerization reaction by exposure to light or capable of being decomposed by exposure to light, which comprises a monomer and a photoinitiator and, if required, a sensitizer, an oligomer, a binder and other constituents.

Examples of the photopolymer include those described in "Photopolymer Handbook" (Kogyou Chosakai Publishing Co., Ltd.: 1989); "Photopolymer Technology" (Daily Industrial Newspapers: 1989); SPIE Proceedings Vol. 3010 (1997) and Vol. 3291 (1998) of Society of Photo-Optical Instrumentation Engineers (SPIE); U.S. Patent Nos. 4,942,112, 4,959, 284, 5,759,721 and 6,221,536; Publication of International Application Nos. 97/13183, 97/44714 and 99/26112; Japanese Patent Nos. 2849021, 2873126, 2880342, 3057082 and 3161230; and Publication of Japanese Patent Application Nos. 2000-275859 and 2001-316416.

-Monomer-

The monomer is not bounded by type and may be selected appropriately according to purposes or applications of the optical information recording medium. Examples of the monomers include radical polymerization type monomers having an unsaturated bond such as an acryl group or a methacryl group and cationic polymerization type monomers having an ether structure such as an epoxy ring or an oxetane ring. These monomers may be monofunctional or multifunctional. Further, they may be of a type utilizing a bridging reaction. Examples of the radical polymerization type monomers include acryloyl morpholine, phenoxyethyl acrylate, isobornyl acrylate, 2-hydroxypropyl acrylate, 2-ethylhexyl acrylate, 1,6-hexanediol diacrylate, tripropylene glycol diacrylate, diacrylate of propylene oxide modified neopentyl glycol, 1,9-nonandiol diacrylate, hydroxypivalate neopentyl glycol diacrylate, diacrylate of ethylene oxide modified bisphenol A, polyethylene glycol diacrylate, pentaerythritol triacrylate, pentaerythritol tetraacrylate, pentaerythritol hexaacrylate, triacrylate of ethylene oxide modified glycerol, trimethylolpropane acrylate, triacrylate of ethylene oxide modified trimethylolpropane, 2-naphtol-1-oxyethyl acrylate, 2-carbazole-9-yl ethyl acrylate, (trimethyl- silyloxyl) dimethylsilyl propyl acrylate, vinyl-1-naphthoate, N-vinylcatbazole, etc. Examples of the cationic polymerization type monomers include bisphenol A epoxy resins, phenol novolac epoxy resins, glycerol triglycidyl ethers, 1,6-hexanglycidyl ethers, vinyl trimethoxy shiran, 4-vinylphenyl trimethoxyshiran, γ-methacryloxy propyl triethoxyshiran, and compounds expressed by the following structural formulas (M1) to (M6). These monomers may be used individually or in any combination of two or more.

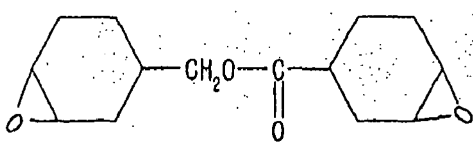

M1

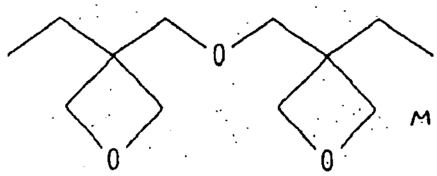

M2

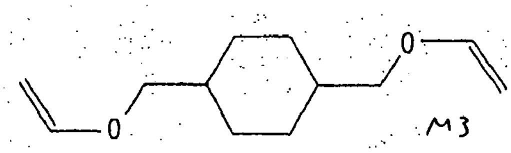

M3

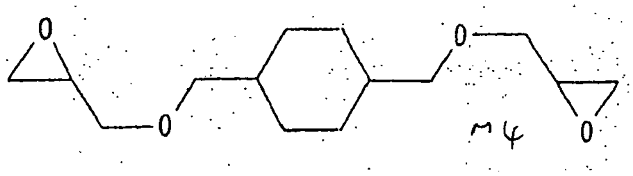

M4

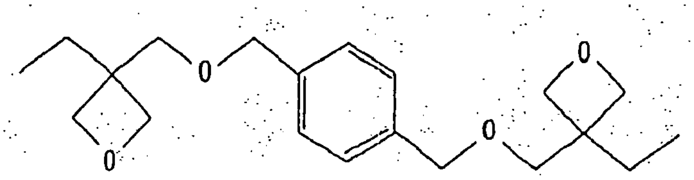

(M5)

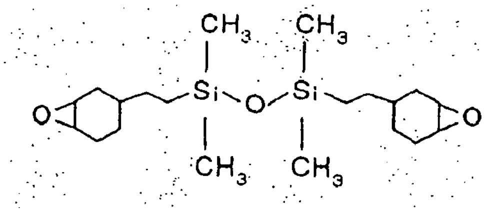

(M6)

The photoinitiator is not bounded by type as long as it has sensitivity to information-bearing light and may be of a type causing radical polymerization, cationic polymerization, bridging reaction, etc., by exposure to light. Examples of the photoinitiator include 2,2'-bis(o-chlorophenyl)-4,4',5,5'-tetraphenyl-1,1'-biimidazol; 2,4,6-tris(trichloromethyl)-6-(p-methoxy phenylvinyl)-1,3,5-triazine; diphenyliodonium tetrafluoroborate; diphenyliodonium hexafluoro- phosphate; 4, 4'-di-t-butyl diphenyl iodonium tetrafluoroborate; 4-diethyl aminophenylbenzene diazonium hexafluorophospate; benzoin, 2-hydroxy-2-methyl-1-phenylpropan-2-on; benzophenone; thioxanthine; 2,4,6- trimethylbenzoil diphenylacyl phosphine oxide; triphenylbutyl borate tetraethyl ammonium; bis(η-5-2,4-cyclopentadiene-1-ill); bis[2,6-difluoro-3-1H-yrrole-ill)phenyltitanium]; diphenyl-4-phenylthiophenylsulfoniumhexafluorophosphate, etc. These photoinitiators may be used individually or in any combination of two or more. The photoinitiator may be used in combination with a sensitizing dye.

-Sensitizing dye-

Examples of the sensitizing dye include chemical compounds known in the art such as those described in "Research Disclosure" Vol. 200, Item 20036 (December 1980) and "Initiator" pages 160 to 163 (Kodansha Ltd. 1987). One such example is a spectral sensitizing dye. Examples of the spectral sensitizing dye include 3-ketocoumarin compounds such as described in Unexamined Japanese Patent Publication No. 58-15603, thiopyrylium salts such as described in Unexamined Japanese Patent Publication No. 58-40302, naphthothiazole merocyanine compounds such as described in Japanese Patent Publication Nos. 59-28328 and 60-53300, and merocyanine compounds such as described in Japanese Patent Publication Nos. 61-9621 and 62-3842 and Unexamined Japanese Patent Publication Nos. 59-89303 and 60-60104. Furthermore, dyes described in "Chemistry of Functional Dyes" pages 393 to 416 (CMC Publishing; 1981) and "Colour Materials" Vol. 60[4], pages 212 to 224 (1987). Specific examples of the dye include cationic methane dyes; cationic carbonium dyes; cationic quinonimin dyes; cationic indrine dyes; and cationic styryl dyes; and besides, keto dyes such as coumarin (which includes ketocoumarin and sulfonocoumarin) dyes, merostyryl dyes, oxonol dyes, hemioxonol dyes, etc.; non-keto dyes such as non-ketopolymethine dyes, triarylmetane dyes, xanthein dyes, anthracene dyes, rhodamine dyes, acridene dyes, aniline dyes, azoic dyes, etc.; non-ketoplymethine dyes such as azomethine dyes, cyanine dyes, carbocyanine dyes, dicarbocyanine dyes, tricarbocyanine dyes, hemicyanine dyes, styryl dyes,

etc.; and quininimin dyes such as azine dyes, oxizine dyes, thiazine dyes, quinoline dyes, thiazole dyes, etc. These dyes may be used individually or in any combination of two or more.

-Binder resin-

The binder resin is used in order to improve an effect of enhancing holographic recording characteristics, formability and strength of the holographic recording layer and is selected in consideration with compatibility with a holographic recording material and a photothermal conversion material. The binder resin is not bounded by type and may be selected from various types known in the art according to purposes or applications of the optical information recording medium. Examples of the binder resin include polyvinyl alcohol resins; gelatin; vinyl chloride-vinyl acetate copolymers; copolymers of vinyl chloride or vinyl acetate with either one of vinyl alcohol, maleic acids and acrylic acids; vinyl chloride-vinylidene chloride copolymers; vinyl chloride-acrylicnitrile copolymers; ethylene-vinyl acetate copolymers; derivatives of cellulose such as nitrocellulosic resins; polyacrylic resins; polyvinyl acetal resins; polyvinyl butyral resins; epoxy resins; phenoxy resins; polyurethane resins; polycarbonate resins; novolak resins; soluble nylon; polystyrene resins; melamine resins; formalin resins; etc. These binder resins may be used individually or in any combination of two or more. It is desirable in order to improve dispersibility and durability of the binder resin to mix a polar group such as an epoxy group, $CO_2H$, OH, $NH_2$, $SO_3M$, $OSO_3M$, $PO_3M_2$, $OPO_3M_2$ (where M is a hydrogen atom, an alkaline metal or ammonium and, when two or more Ms exist in one group, they may be different from one another) in molecules of the binder resin. The polar group content is desirable in a range of from $10^{-6}$ to $10^{-4}$ equivalent weight per 1 g of binder resin. The binder resins described above may be cured by a cross-linking agent known in the art such as hemiacetal cross-linking agents or isocyanate cross-linking agent added therein.

The binder content in a solid content of the holographic recording layer is not bounded and may be selected according to purposes or applications of the optical information recording medium. A desirable binder content with respect to the holographic recording layer is preferably in a range of from 10 to 95 % by mass and more preferably in a range of from 35 to 90 % by mass relative to a solid content of the holographic recording layer. The holographic recording layer is hard to provide a stable interference figure if the lower limit of 10 % by mass is exceeded and to attain a desired performance in light of diffraction efficiency if the upper limit of 95 % by mass is exceeded.

The binder content with respect to the photosensitive layer is preferably in a range of from 10 to 95 % and more preferably in a range of from 35 to 90 % by mass relative to a total solid content of the photosensitive layer.

-Polymerization inhibitor and oxidation inhibitor-

The holographic recording layer may be added with a polymerization inhibitor and/or an oxidation inhibitor for the photopolymer in order to improve storage stability. Examples of the polymerization inhibitor and oxidation inhibitor include hydroquinone, p-benzoquinone, hydroquinone monomethyl ether, 2,6-ditasharybutyl-p-cresol, 2,2'-methylen bis (4-methyl-6- tashary-butylphenol), triphenylphosphate, trisnonyl phenylphosphate, phenothiazine, N-isopropyl-N'-phenyl-p-phenylenediamine, etc. The content of polymerization inhibitor and/or oxidation inhibitor is desirably within 3 % by mass with respect to the total content of monomers used for the constituents. If the content of polymerization inhibitor and/or oxidation inhibitor exceeds 3 % by mass, the photopolymer tends to get late in polymerization or to fail to polymerize in a remarkable case.

-Other constituents in holographic recording layer-

The holographic recording layer may contain a photothermal conversion material in order to improve sensitivity thereof. Examples of the photothermal conversion material include those described in Japanese patent application No. 2005-84780. Further, the holographic recording layer may contain a constituent material which is capable of diffusing in a direction inversely with the polymerization constituent in order to alleviate a volume change of the holographic recording layer during polymerization, or may be added with a compound having an acid splitting structure, besides a polymer, separately.

<Optical information recording method>

The optical information recording medium is not bounded by recording method and may be recorded by any methods, transmission type or reflection type, known in the art according to purposes or applications thereof. As was described previously, the hologram type may be an amplitude hologram, a phase hologram, a blazed hologram or a complex amplitude hologram.

Figure 7 shows one of the optical recording methods. As shown, light emanating from a light source 1 is split into two, namely information-bearing light 51 passing through a half mirror 64 and reference light 52 reflected by the

half mirror 64. The information-bearing light 51 is reflected by a reflective mirror 66 and then diverged by an expander lens 68 so as to impinge on one of the opposite recording surface of a holographic recording layer 50. On the other hand, the reference light 52 is reflected by a reflective mirror 65 and then diverged by an expander lens 67 so as to impinge on the other surface of the holographic recording layer 50. These information information-bearing light 51 and reference light 52 interfere to generate interference fringes, representing optical information, inside the holographic recording layer by superposition between them.

<Optical information reproducing method>

The optical information recording medium is not bounded by reproducing method and may be reproduced by any methods known in the art according to purposes or applications thereof. For example, the optical information may be reproduced by exposing the optical information recording medium to reference light in the same direction as recording so as to diffract it by the interference fringes.

<< Second configuration of optical information recording medium >>

The second configuration of optical information recording medium comprises, for example, a holographic recording layer through a filter layer and a filter layer formed in this order on a second substrate and covered by a first substrate and is used with collinear recording in which information-bearing light and reference light impinge collinearly on the holographic recording layer.

< Optical information recording and reproducing methods>

The optical information recording of the second configuration of optical information recording medium is performed by illuminating information-bearing light and reference light collinearly onto the second configuration of optical information recording medium so that the information-bearing light and the reference light interfere to generate interference fringes, representing optical information, inside the holographic recording layer by superposition between them. The second configuration of optical information recording medium is not bounded by reproducing method and may be reproduced by any methods known in the art according to purposes or applications thereof. For example, the optical information is reproduced by exposing the optical information recording medium to the same reference light as used in recording so as to diffract it by the interference fringes.

The recording and reproducing of optical information from the second configuration of optical information recording medium is performed by generating interference fringes inside the holographic recording layer by superposition of information-bearing light having a two dimensional intensity distribution and reference light having nearly the same intensity as the light-bearing light so as thereby to record the optical information in the form of interference fringes representing a distribution of optical characteristic. On the other hand, in order to reproduce the optical information, the optical information recording medium is exposed to reference light in the same direction as recording so as thereby to distribute it by the interference fringes. Consequently, the reference light is reproduced in the form of reproducing light having an intensity distribution representing the distribution of optical characteristics formed in the holographic recording layer.

Referring to Figure 14 showing, in a block diagram, an optical information recording/reproducing apparatus 100 for implementing the recording/reproducing the optical information from the optical information recording medium of the present invention by way of example, the optical information recording/reproducing apparatus 100 is provided with a spindle 81 to which the optical information according medium 21 is attached, a spindle motor 82 for driving the spindle 81 and a spindle servo circuit 83 for maintaining a specified speed of rotation of the optical information according medium 21. The optical information recording/reproducing apparatus 100 is further provided with a pickup 31 which provides information light and reference light for recording information in the optical information recording medium 21 or reference light for picking up reproducing light to reproduce the information from the optical information recording medium 21 or 22. The pickup 31 is accompanied by a drive unit 84 for controlling movement of the pickup 31 in a radial direction of the optical information recording medium 21.

The optical information recording/reproducing apparatus 100 is further provided with various circuits, namely a signal detection circuit 85, a focusing servo circuit 86, a tracking servo circuit 87, a slide servo circuit 88 and a signal processing circuit 89. The signal detection circuit 85 operates to detect a focusing error signal FE, a tracking error signal TE and a reproduction signal RF from output signals of the pickup 31. The focusing servo circuit 86 operates to drive an actuator in the pickup 31 so as to move an objective lens (not shown) in a direction of thickness of the optical information recording medium 21 for performing focusing servo control according to the focusing error signal FE. The tracking servo circuit 87 operates to drive the actuator in the pickup 31 so as to move the objective lens in a radial direction of the optical information recording medium 21 for performing tracking servo control according to the tracking

error signal TE. The slide servo circuit 88 operates to control the drive unit 84 so as to move the pickup 31 in a radial direction of the optical information recording medium 21 for performing slide servo control according to the tracking error signal TE and a command signal from a controller 90 which will be described later. The signal processing circuit 89 operative to reproduce of data stored in a data area of the optical information recording medium 21 by decoding data from a CMOS sensor or a CCD array which will be described later and to reproduce basic clocks from the reproduction signal RF provided by the signal detection circuit 85 and to discriminate addresses. The reproduced basic clocks are sent to the spindle servo circuit 83.

The controller 90, which comprises CPU, ROM and RAM such that the CPU executes programs stored in the ROM in the RAM as a working area, receives various command signals through an operation control panel 91 and performs overall control of the optical information recording/reproducing apparatus 100. Specifically, the controller 90 receives basic clocks and address, and controls the pickup 31, the spindle servo circuit 83 and the slide servo circuit 88.

The second configuration of optical information according medium is capable of being intensified through photothermal conversion by the use of sensitizing light simultaneously with recordation of interference fringes, so as to provide high resolution and high diffraction efficiency.

<Holographic recording layer>

The holographic layer may be the same as that of the first configuration of optical information recording medium comprising a photopolymer as a major constituent.

<Filter layer>

The filter layer functions to prevent diffused reflection of information-bearing light and reference light by the reflective layer without causing a shift of selectively reflective wavelength even though an incident angle of light varies, and hence, to prevent generation of noises. The optical information recording medium provided with the filter layer attains excellent resolution and excellent diffraction efficiency. The filter layer

The filter layer transmits a first specified wavelength of light (which is hereafter referred to as first light) and concurrently reflects a second specified wavelength of light different from the first light (which is hereafter referred to as second light). It is desirable that the first light is in a wavelength band of from 350 to 600 nm and for the second light to be in a wavelength band of from 600 to 900 nm. It is desirable on that account that the optical information recording medium has a structure of lamination comprising the holographic recording layer, the filter layer and the servo-pit pattern layer in this order.

The filter layer has a transmissivity higher than 50 % and preferably higher than 80 % for light having a wavelength of 655 nm and entering at an incident angle of $\pm 40^\circ$ and higher than 30 % and preferably higher than 40 % for light having a wavelength of 532 nm and entering at an incident angle of $\pm 40^\circ$.

The filter layer is not bounded by type and may comprise a dielectric deposition layer, a cholesteric liquid crystal layer of single layer structure or multi-layer structure, or a lamination with other layers. The filter layer may further comprise a colour material contained layer. It is allowed to apply the filter layer directly to the support sheet together with the holographic recording layer or to laminate a filter prepared by forming a filter layer on a substrate such as a film on the support sheet.

-Dielectric deposition layer-

The dielectric deposition layer comprises a lamination of a plurality of thin dielectric films different in refractive index from one another and, in order to have wavelength selectivity, two or more alternating deposition layers of high refractive index and low refractive index of thin dielectric films. When the colour material contained layer is included, it is formed under the dielectric deposition layer. The lamination comprises preferably between 2 and 20 thin dielectric films, more preferably between 2 and 12 thin dielectric films, furthermore preferably between 4 and 10 thin dielectric films, and most preferably between 6 and 8 thin dielectric films. If the lamination comprises more than 20 thin dielectric films, the productive efficiency of the dielectric deposition layer turns down due to multi-layer deposition which increases the difficulty of accomplishing the object and effects of the present invention.

The dielectric deposition layer is not bounded by deposition order and may formed in any order according to purposes or applications of the optical information recording medium. For example, when depositing two thin dielectric films adjacent to each other which have refractive indices higher than a threshold refractive index of, preferably, 1.8, either one which has a refractive index lower than the other is deposited first. On the other hand, when depositing two thin dielectric films adjacent to each other which have refractive indices lower than a threshold refractive index of, preferably, 1.8, either one which has a refractive index higher than the other is deposited first. In this instance, the alternative deposition layer may comprise thin dielectric films of high refractive materials which have refractive indices

relatively different from each other.

The high refractive material for the thin dielectric film is not bounded by type and may be selected from various types known in the art according to purposes or applications of the optical information recording medium. Examples of the high refractive material include $Sb_2O_3$, $Bi_2O_3$, $CeO_2$, $CeF_3$, $HfO_2$, $La_2O_3$, $Nd_2O_3$, $Pr_6O_{11}$, $Sc_2O_3$, SiO, $Ta_2O_5$, $TiO_2$, TlC1, $Y_2O_3$, ZnSe, ZnS, $ZrO_2$, etc. Thereamong, it is desirable to employ $Bi_2O_3$, $CeO_2$, $CeF_3$, $HfO_2$, SiO, $Ta_2O_5$, $TiO_2$, $Y_2O_3$, ZnSe, ZnS or $ZrO_2$, and more preferably SiO, $Ta_2O_5$, $TiO_2$, $Y_2O_3$, ZnSe, ZnS or $ZrO_2$.

The low refractive material for the thin dielectric film is not bounded by type and may be selected from various types known in the art according to purposes or applications of the optical information recording medium. Examples of the high refractive material include $Al_2O_3$, $BiF_3$, $CaF_2$, $LaF_3$, $PbCl_2$, $PbF_2$, LiF, $MgF_2$, MgO, $NdF_3$, $SiO_2$, $Si_2O_3$, NaF, $ThO_2$, $ThF_4$, etc. Thereamong, it is desirable to employ $Al_2O_3$, $BiF_3$, $CaF_2$, $MgF_2$, MgO, $SiO_2$ or $Si_2O_3$, and more preferably $Al_2O_3$, $CaF_2$, $MgF_2$, MgO, $SiO_2$ or $Si_2O_3$.

In this instance, the material for the thin dielectric film is not bounded by atomic ratio and may selected various types known in the art according to purposes or applications of the optical information recording medium. The atomic ratio can be adjusted by varying a concentration of atmosphere gas during film forming.

The thin dielectric film is not bounded by deposition method and may be deposited by any methods known in the art according to purposes or applications of the optical information recording medium. Examples of the deposition method include physical vapour deposition (PVD) such as ion plating, vacuum deposition by the use of ion beam, spattering; and chemical vapour deposition (CVD). Thereamong, it is desirable to employ the vacuum deposition or the spattering and more preferably the spattering. In particular, it is encouraged to use DC spattering together with a high conductive material in light of film forming rate. In the case where a plurality of films are deposited by the spattering, there are two methods, single chamber spattering by which films are formed from a plurality of targets alternately or in order in a single chamber and multi-chamber spattering by which films are formed continuously in a plurality of chambers. In light of productivity and prevention of material contamination, the multi-chamber spattering is especially preferred.

It is desirable that the thin dielectric film has a thickness preferably in a range of from λ/16 to λ, more preferably in a range of from λ/8 to 3λ/4, and most preferably in a range of from λ/6 to 3λ/8, in optical wavelength order.

< Cholesteric liquid crystal layer>

The cholesteric liquid crystal layer contains at least a cholesterol derivative or a nematic liquid crystal compound, and a chiral compound, and besides a polymerizable monomer and other constituents, if necessary. The cholesteric liquid crystal layer may be of a single-layer structure or a multi-layer structure. The cholesteric liquid crystal layer desirably has the function of separating circular polarized light. Such the cholesteric liquid crystal layer selectively reflects a circular polarized light component that the circular polarized light has a polarization direction coincide with a rotative direction of spiral of the liquid crystal and a wavelength coincide with the pitch of spiral of the liquid crystal. Therefore, the cholesteric liquid crystal layer thus constructed transmits and separates circular polarized light having a specified wavelength and reflects the remaining circular polarized light from natural light in a specific wavelength range.

The filter of the optical information recording medium is desirable to have a reflectivity higher than 40% preferably for light incident thereon at an incident angle of ±20°, i.e. in a range of from $\lambda_0$ to $\lambda_0$/cos20° (where λ is the wavelength of incident light), and more preferably for the light incident thereon at an incident angle of ±40°, i.e. in a range of from $\lambda_0$ to $\lambda_0$/cos40°, with respect to a vertical incident angle (0°). If the reflectivity for light incident thereon in a range of from $\lambda_0$ to $\lambda_0$/cos20° and, in particular, in a range of from $\lambda_0$ to $\lambda_0$/cos40° is higher than 40%, the reflection of incident light is freed from the constraints of angle dependency, so as to make it possible to employ an optical system used in a conventional optical information recording/reproducing apparatus. For exploiting this optical characteristic, it is desirable that the cholesteric crystal layer has a wide wavelength band of selective reflection.

Specifically, in the case of the cholesteric liquid crystal layer of single layer structure, the wavelength band of selective reflection Δλ is given by the following expression.

$$\Delta\lambda = 2\lambda(ne - no)/(ne + no)$$

where ne is the refractivity of nematic liquid crystal molecules contained in the cholesteric crystal layer for extraordinary light, and no is the refractivity of nematic liquid crystal molecules contained in the cholesteric crystal layer for ordinary light. Therefore, it is desirable to use a liquid crystal having a large difference of refractivity (ne - no). Further, as described in Unexamined Japanese patent application No. 2006-162814, it is desirable to use a filter having spiral pitches continually changed in a direction of thickness of liquid crystal. Such a filter is prepared by the use of a photoreactive chiral compound having photosensitivity and capable of causing a large change in spiral pitch of liquid crystal with light of which the content of chiral component of the filter and an irradiation time to ultraviolet light are appropriately adjusted.

In the case of the cholesteric liquid layer of multi-layer structure, it is desirable to form a laminate of cholesteric layers which are different in the central wavelength of selective reflection from each other and have rotative directions of spiral identical with each other. The cholesteric liquid layer is not bounded by type as long as satisfying the above optical characteristics and may be selected from various types known in the art according to purposes or applications of the optical information recording medium. However, as was described previously, the cholesteric liquid layer is required to contain a nematic liquid crystal compound and a chiral compound, and besides a polymerizable monomer and other constituents as appropriate.

-Nematic liquid crystal compound-

The nematic liquid crystal compound is characterized in that a liquid crystal phase is made static at a temperature lower than a liquid crystal transition temperature and may be selected from a group of a liquid crystal compound, a highly polymerized liquid crystal compound and polymerizable liquid crystal compound which have refractive anisotropy $\Delta n$ in a range of from 0.10 to 0.40. The nematic liquid crystal compound can be used in a solid phase. In order to provide a solid phase, molecules of the nematic liquid crystal in a liquid state are aligned by the use of, for example, a rubbing processed orienting substrate and then cooled so as thereby to be solidified.

The nematic liquid crystal compound is not bounded by type and may be selected from various types known in the art according to purposes or applications of the optical information recording medium. In light of ensuring sufficient solidification ability, it is desirable to use nematic liquid crystal compounds having a polymerizable group in a molecule such as, in particular, an ultraviolet polymerizing liquid crystal. Examples of commercially available nematic liquid crystal compounds include PALIOCOLOR LC242 (trade name of BASF Corporation); E7 (trade name of Merck Corporation); LC-Sllicon-CC3767 (trade name of Wacker-Chem AG); and L35, L42, L55, L59, L63, L79 and L83 (trade name of Takasago International Corporation).

The content of nematic liquid crystal compound is preferably in a range of from 30 to 99 % by mass, and more preferably in a range of from 50 to 99 % by mass, with respect to the total solid contents of the cholesteric liquid crystal layer. If the content of nematic liquid crystal compound is less than 30 % by mass, it is not good enough to align molecules of the nematic liquid crystal compound sufficiently.

-Chiral compound-

In the case where the chiral compound is used in the cholesteric liquid crystal layer having a multi-layer structure, it is not bounded by type and may be selected from various types known in the art according to purposes or applications of the optical information recording medium. In light of hue and colour purity improvement of liquid crystal compound, preferred examples of the chiral compound are isomannid compounds, catechin compounds, isosorbide compounds, fencon compounds, carbon compounds, etc. Examples of commercially available chiral compound include S101, R811 and CB 15 (trade name of Merck Corporation); and PALIOCOLOR LC756 (trade name of BASF Corporation). These chiral compounds may be used individually or in any combination of two or more.

The content of chiral compound in the cholesteric liquid crystal layer having a multi-layer structure is preferably in a range of from 0 to 30 % by mass, and more preferably in a range of from 0 to 20 % by mass, with respect to the total solid contents of the cholesteric liquid crystal layer. If the content of chiral compound is greater than 30 % by mass, it is too much to align molecules of the cholesteric liquid crystal sufficiently.

-Polymerizable monomer-

The cholesteric liquid crystal layer may contain a polymerizable monomer, for example, for improvement of the degree of curing, i.e. film strength. When containing the polymerizable monomer, the cholesteric liquid layer is enhanced in strength by fixing a spiral structure (selective reflectivity) of the liquid crystal after a changing twisting power of the liquid crystal (patterning) by exposure to light. In this instance, it is not always necessary for the liquid crystal component to contain a polymerizable monomer in the case where the liquid crystal compound has a polymerizable group in the same molecule.

The polymerizable monomer is not bounded by type and may be selected from various types known in the art according to purposes or applications of the optical information recording medium. Examples of the polymerizable monomer include monomers having ethylenic unsaturated bonds, and more specifically, multifunctional monomers such as pentaerythritol tetraacrylate, pentaerythritol hexaacrylate, etc. These monomers may be used individually or in any combination of two or more.

It is desired that the content of polymerizable monomer is preferably in a range of from 0 to 50 % by mass, and more preferably in a range of from 1 to 20 % by mass, with respect to the total solid contents of the cholesteric liquid crystal layer. If the content of polymerizable monomer excesses 50 % by mass, it constitutes a limiting factor of alignment

of the cholesteric liquid crystal.

-Other constituents-

The other constituents used in the filter layer are not bounded by material and may be selected from various materials known in the art according to purposes or applications of the optical information recording medium. Examples of the other constituent include a photoinitiator, a sensitizer, a binder resin, a polymerization inhibitor, a solvent, a surface-active agent, a viscosity improver, a dye, a pigment, an ultraviolet absorbent, a gelatinizer, etc.

The photoinitiator is not bounded by type and may be selected from various types known in the art according to purposes or applications of the optical information recording medium. Examples of the photoinitiator include p-methoxyphenyl-2, 4 bis(trichloromethyl)-s-triazine; 2-(p-butoxystyryl)- 5-tri tri chloromethyl, 1, 3, 4-oxyadiazole; 9-phenylacridine; 9, 10-dimethylbenzphenazine; benzophenone/mehiraz keton; hexaallylbiimidazole/merucapt benzimidazole; benzyldimetylketal; acyl phosphone derivatives; thioxanthone/amine; etc. The photopolymerization initiator may be used individually or in any combination of two or more. Examples of commercially available photoinitiator include IRGACURE 907, IRGACURE 369, IRGACURE 784 and IRGACURE 814 (trade named of Ciba Specialty Chemicals); LUCYRIN TPO (BASF Corporation); etc.

The content of photoinitiator is preferably in a range of from 0.1 to 20 % by mass, and more preferably in a range of from 0.5 to 5 % by mass, with respect to the total solid contents of the cholesteric liquid crystal layer. If the content of photoinitiator is lower than 0.1 % by mass, the liquid crystal layer encounters deterioration in curing efficiency. On the other hand, if the content of photoinitiator is higher than 20 % by mass, the cholesteric liquid crystal layer encounters deterioration in transmissivity in a region of from ultraviolet light to visible light

The sensitizer is added in order to increase the degree of curing of the cholesteric liquid crystal layer. The sensitizer is not bounded by type and may selected from various types known in the art such as diethylthioxanthone, isopropylthioxanthone, etc. according to purposes or applications of the optical information recording medium. The content of sensitizer is preferably in a range of from 0.001 to 1.0 % by mass with respect to the total solid contents of the cholesteric liquid crystal layer.

The binder resin is not bounded by type and may selected from various types known in the art according to purposes or applications of the optical information recording medium. Examples of the binder resin include polyvinyl alcohol; polystyrene compounds such as polystyrene, poly-$\alpha$-methylstyrene, etc.; cellulose resins such as methylcellulose, ethylcellulose, acetylcellulose, etc.; acid cellulose derivatives having a lateral chain of carboxyl group; acetal resins such as polyvinyl formal, polyvinyl butyral, etc.; methacrylate copolymers; acrylate copolymers; itaconate copolymers; crotonate copolymers; maleic copolymers; partially esterified maleic copolymers; homopolymers of alkyl acrylate ester or alkyl methacrylate ester; polymers having other hydroxyl groups; etc. Examples of the alkyl group of the homopolymer of alkyl acrylate ester or alkyl methacrylate ester include, for example, a methyl group, an ethyl group, an n-propyl group, an n-butyl group, an isobutyl group, an n-hexyl group, a cyclohexyl group, a 2-ethylhexyl group, etc. Examples of the polymer having another hydroxyl group include, for example, benzyl(meta)acrylate-(homopolymer of meta acrylate) acrylate copolymers, benzyl(meta)acrylate-(meta)acrylate-another monomer hypercopolymers, etc. These binder resins may be used individually or in any combination of two or more.

The additive amount of binder resin is preferably in a range of from 0 to 80 % by mass, and more preferably in a range of from 0 to 50 % by mass, with respect to the total solid contents of the cholesteric liquid crystal layer. If the additive amount of binder resin exceeds 80 % by mass, it constitutes a limiting factor of alignment of the cholesteric liquid crystal.

The polymerization inhibitor is not bounded by type and may be selected from various types known in the art according to purposes or applications of the optical information recording medium. Examples of the polymerization inhibitor include hydroquinone, hydroquinone monomethyl ether, phenothiazine, benzoquinone, and derivatives of them. The additive amount of polymerization inhibitor is preferably in a range of from 0 to 10 % by mass, and more preferably in a range of from 100 ppm to 1 % by mass, with respect to the total solid contents of the cholesteric liquid crystal layer.

The solvent is not bounded by type and may selected from various types known in the art according to purposes or applications of the optical information recording medium. Examples of the solvent include alkoxy propionate esters such as 3-methoxy methyl propionate ester, 3-methoxy ethyl propionate ester, 3-methoxy propyl propionate ester, 3-ethoxy methyl propionate ester, 3-ethoxy ethyl propionate ester, 3-ethoxy propyl propionate ester, etc.; ester of alkoxy alcohol such as 2-methoxy propyl acetate, 2-ethoxy propyl acetate, 3-methoxy butyl acetate, etc.; lactic ester such as methyl lactate, ethyl lactate, etc.; ketone such as methyl ethyl ketone, cyclohexanone, methylhexanone, etc.; $\gamma$-butyrolactone; N-methylpyrrolidone; dimethylsulfoxide; chloroform; tetrahydrofuran, etc. These solvents may be used individually or in any combination of two or more.

The cholesteric liquid crystal layer may be formed by applying a coating liquid of cholesteric liquid crystal dissolved in a solvent onto a substrate and exposing it to, for example, ultraviolet light. One of coating methods that is suitable for mass-production of the cholesteric liquid crystal layer is continuous coating in which a solution of cholesteric

liquid crystal is applied to a support sheet unwound from a roll by bar coating, dye coating, blade coating or curtain coating. Examples of the coating method include spin coating, cast coating, roll coating, flow coating, printing, dip coating, flow spread film forming, bar coating, gravure printing, etc.

The exposure to ultraviolet light is not bounded by condition and may be conditioned appropriately according to purposes or applications of the optical information recording medium. It is desirable to expose the cholesteric liquid crystal layer to ultraviolet light preferably in a wavelength band of from 160 to 380 nm, and more preferably in a wavelength band of from 250 to 380 nm, preferably for a time interval of from 0.1 to 600 secs, and more preferably for a time interval of from 0.3 to 300 secs. It is enabled to change continually spiral pitches of the cholesteric liquid crystals containing a photoreactive chiral component in a direction of thickness by controlling the conditions of exposure to ultraviolet light. In order to control the condition of exposure to ultraviolet light, it is allowed to add an ultraviolet absorbent in the cholesteric liquid crystal layer. The ultraviolet absorbent is not bounded by type and may be selected from various types known in the art according to purposes or applications of the optical information recording medium. Examples of the ultraviolet absorbent include benzophenone ultraviolet absorbents, benzotriazole ultraviolet absorbents, salicylate ultraviolet absorbents, cyanoacrylate ultraviolet absorbents, oxalic acid anilide ultraviolet absorbents, etc., and, more specifically, ultraviolet absorbents described in Unexamined Japanese Patent Publication Nos. 47-10537, 58-111942, 58-212844, 59-19945, 59-46646,59-109055 and 63-53544, Japanese Patent Publication Nos. 36-10466, 42-26187, 48-30492, 48-31255, 48-41572, 48-54965 and 50-10726 , and U.S. patent Nos. 2,719,086, 3,707, 375, 3,754,919 and 4,220,711.

Each layer of the cholesteric liquid crystal layer having a multi-layer structure is desirable to have a thickness preferably in a range of from 1 to 10 μm, and more preferably in a range of from 2 to 7 μm. The cholesteric liquid crystal layer is not good enough to gain sufficient selective reflectivity if having a thickness less than 1 μm, or gets out of orderly alignment if having a thickness greater than 10 μm. The total thickness of the cholesteric liquid crystal layer, having a single layer structure or a multi-layer structure, is desirable to have a thickness preferably in a range of from 1 to 30 μm, and more preferably in a range of from 3 to 10 μm.

<Manufacturing method for filter having cholesteric liquid crystal layer>

The filter having the cholesteric liquid crystal layer is not bounded by manufacturing method and may be formed by any methods known in the art according to purposes or applications of the optical information recording medium. It is desirable that the filter is formed in a disk shape together with a substrate and disposed on the second substrate. In the case where the filter is used for a filter layer, the filter layer may be disposed directly on the second substrate.

<Substrate>

The substrate is not bounded by material and may be selected from various materials known in the art according to purposes or applications of the optical information recording medium. For example, the substrate may be made of the same material as the substrate for the second configuration of optical information recording medium. The substrate, which may be synthesized or commercially offered, is not bounded by thickness and may have a thickness appropriately selected according to purposes or applications of the optical information recording medium. It is desirable that the substrate has a thickness preferably in a range of from 10 to 500 μm, and more preferably in a range of from 50 to 300 μm. The substrate possibly encounters deterioration in adhesiveness due to distortion thereof if exceeding a thickness of 10 μm or causes significant displacement of a focused point of information-bearing light and reference light which leads to a necessity of a large size of optical system. Wavelength selective films may be bonded with adhesives in combination selected from various adhesives known in the art.

The pressure sensitive adhesive is not bounded by type and may be selected from various types known in the art according to purposes or applications of the optical information recording medium. Examples of the pressure sensitive adhesive include rubber pressure sensitive adhesives, silicone pressure sensitive adhesives, urethane pressure sensitive adhesives, vinyl alkyl ether pressure sensitive adhesives, polyvinyl alcohol pressure sensitive adhesives, polyvinyl pirrolide pressure sensitive adhesives, polyacrilamide pressure sensitive adhesives, cellulose pressure sensitive adhesives, etc. It is allowed to form the filter layer directly on the substrate.

The adhesive or the pressure sensitive adhesive is not bounded by spread thickness and may have a spread thickness appropriate according to purposes or applications of the optical information recording medium. In light of optical characteristics and thinness, the thickness is preferably in a range of from 0.1 to 10 μm, and more preferably in a range of from 0.1 to 5 μm for the adhesive, and preferably in a range of from 1 to 50 μm, and more preferably in a range of from 2 to 30 μm for the pressure sensitive adhesive.

-Optical information recording medium having reflective later and first and second gap layers-

The optical information recording medium comprises a first substrate, a second substrate, the holographic

recording layer formed on the second substrate, the filter layer formed between the second substrate and the holographic recording layer, and besides, a reflective layer, first and second gap layers, and other layers as appropriate.

-Substrate-

The substrate is not bounded by shape, structure and size and may be formed in appropriate shape, structure and size according to purposes or applications of the optical information recording medium. The substrate may be shaped depending upon the optical information recording medium, disk-shaped or card-shaped. It is desirable that the substrate is made of a material capable of providing sufficient mechanical strength for the optical information recording medium. In the case where information-bearing light and reference light enters the optical information recording medium through either one of the substrates, it is essential for the substrate to be transparent sufficiently enough for wavelengths of the light. Examples of the substrate include glass, ceramics, resins, etc. Thereamong, the resins are especially favourable in light of formability and costs. Specifically, examples of the resin include polycarbonate resins, acrylic resins, epoxy resins, polystyrene resins, acrylicnitrile-styrene copolymers, polyethylene resins, polypropylene resins, silicone resins, fluorocarbon resins, acrylonitrile-butane-styrene resins, urethane resins, etc. Thereamong, polycarbonate resins or acrylic resins are especially preferable in light of formability, optical characteristics and costs. The substrate may be one that is synthesized or commercially offered.

The substrate is provided with a plurality of radial linear address servo areas, which serve as locating regions, arranged at regular angular intervals so as to form a sector-shaped data area between each circumferentially adjacent radial linear address servo areas. Each address servo area has focusing/tracking servo information and address information previously formed by emboss pits (servo pits) which enables focusing and tracking servo control operation in a sampled servo method. In this instance, the focusing servo may be performed by using a reflective surface of the reflective layer. It is possible to employ, for example, wobble pits for the tracking servo information. When the optical information recording medium takes a card shape, the substrate is not always necessary to have patterned servo pits.

The substrate is not bounded by thickness and may have a thickness appropriately determined according to purposes or applications of the optical information recording medium. Specifically, it is desirable that the substrate has a thickness preferably in a range from 0.1 to 5 mm, and more preferably in a range of from 0.3 to 2 mm. The substrate possibly causes uncontrollable shape deformation during storage if having a thickness less than 0.1 mm and makes the whole optical information recording medium too heavy to load a drive motor in excess if having a thickness greater than 5 mm.

The optical information recording media according to examples 1 and 2 which have the reflective layer and the first and second gap layers will be described with reference to the accompanying drawings. The optical information recording medium is of course allowed that either one or both of the first and second gap layers are left out.

EXAMPLE 1

Figure 10 schematically shows the construction of an optical information recording medium 21 according to first example 1. The optical information recording medium 21 has a bottom or second substrate 1 and a transparent top or first substrate 5 which are made of, for example, a polycarbonate resin or glass. A plurality of patterned servo pit clusters 3 are formed all over on one side of the second substrate 1. The patterned servo pit clusters 3 may be arranged at given intervals as shown in Figure 9. The servo pit has a maximum height of 1,750Å (175 nm) which is thin enough as compared with thickness of other layers. The second substrate 1 is coated with a reflective layer 2 of Al, Au or Pt disposed over the patterned servo pit clusters 3. The optical information recording medium 21 is provided with a first gap layer 8, a filter layer 6, a second gap layer 7 and a holographic recording layer 4 formed in this sequential order on the second substrate 1. The gap layer 8, that is formed by spin coating an ultraviolet cure resin over the reflective layer 2, protects the reflective layer 2a, besides effectively serving to adjust an extent of a hologram produced in the holographic recording layer 4. Generally, in the case where an optical information recording medium has a stratum formed from a photopolymer in which information-bearing light and reference light are focused on, the problem encountered by the optical information recording medium is deterioration in multiplex recording ability due to excessive consumption of monomers resulting from over exposure. Therefore, it is effective to provide a non-reactive transparent second gap 7 between the filter layer 6 and the holographic recording layer 4.

The filter layer 6 serves to transmit red light only and to reflect the remaining components of light such as green light and blue light. In this instance, since red light or blue light is used for information bearing light and reference light, recording or reproducing, both information bearing light and reference light entering the optical information recording medium 21 through an incidence/exit surface A returns taking a reverse way without passing through the filter layer 6 and, hence, reaching the reflective layer 2 and comes out from the incidence/exit surface A. The filter layer 6 comprises three cholesteric liquid crystal layers 6a, 6b and 6c having spiral pitches changed continually in a direction of thickness. The cholesteric liquid crystal layers 6 may be formed by applying a solution of cholesteric liquid crystal directly onto the

first gap layer 8 or, otherwise, may be prepared in the form of a film comprising a cholesteric liquid crystal layer formed on a substrate and then attached onto the first gap layer 8. By virtue of the filter layer 6 comprising these three cholesteric liquid crystal layers 6a, 6b and 6c, the filter layer 6 is adapted to have a reflectivity higher than 40% for light incident thereon at an incident angle in a range of from $\lambda_0$ to $\lambda_0/\cos20^\circ$ and, in particular, in a range of from $\lambda_0$ to $\lambda_0/\cos40^\circ$ (where $\lambda$ is the wavelength of incident light), so as to be prevented from causing a shift of selectively reflective wavelength even though an incident angle of light varies.

The optical information recording medium may be disk-shaped or card-shaped. A card-shaped optical information recording medium may not be provided with patterned servo pit clusters. When the optical information recording medium 21 is 1.9 mm in thickness, the second substrate 1, the first gap layer 8, the filter layer 6, the second gap layer 7, the holographic recording layer 4 and the first substrate 5 are 0.6 mm, 100 $\mu$m, 2 to 3 $\mu$m, 70 $\mu$m, 0.6 mm and 0.6 mm in thickness, respectively.

Referring to Figure 13 schematically showing optical information recording/reproducing, servo laser light (in this case, red laser light) that emanates from a laser source (not shown) and is collimated by a condenser lens (not shown) is almost completely reflected by a dichroic mirror 13 and focused on the reflective layer 2 by an objective lens 12. The dichroic mirror 13 takes the form of beam splitting means for reflecting red light only and transmitting green or blue light. The laser light entering the incidence/exit surface A of the optical recording medium 21 sequentially passes through the first substrate 5, the holographic recording layer 4, the second gap layer 7, the filter layer 6 and the first gap layer 8 and then impinges on and is reflected by the reflective layer 2. The laser light reflected by the reflective layer 2 returns taking a reverse way and comes out from the incidence/exit surface A. The laser light coming out from the optical recording medium 21 is completely reflected by the dichroic mirror 13 and then detected by a photo-sensor (not shown) serving as a servo information detector for detecting servo information used for servo control including at least focusing servo, tracking servo and slide servo. Since the holographic recording layer 4 is not sensitive to red light, the holographic recording layer 4 is not affected by the laser light passing therethrough and stray laser light reflected diffusely by the reflective layer 2.

Figure 12 shows a reflective characteristic of the filter layer 6 for incoming light at an incident angle of $\pm40^\circ$ with respect to vertically incoming light (incident angle of $0^\circ$). As shown, the filter layer reflects light in a wavelength band of from 532 nm ($\lambda_0$) and 692 nm ($1.3\lambda_0$). Therefore, the servo light at a wavelength of 655 nm is reflected by the filter layer 6. When using such light incident at a wide angle of $\pm40^\circ$ in practice, the servo light can be used without any difficulty in servo control by masking out a part excluding the light incident at an angle of $\pm20^\circ$. Further, it is made easy to design the filter layer so that the servo light enters the filter layer with an incident angle of $\pm20^\circ$ by using cholesteric liquid crystal layers having large spiral pitches. In this case, the servo light transmits the filter layer having a reflective wavelength band of from $\lambda_0$ and $1.3\lambda_0$ without any trouble.

On the other hand, laser light, information-bearing light or reference light, (in this case, green or blue laser light) emanating from a laser source 18 controlled by a digital light processor (DLP) combined with the laser source 18 and collimated by a condenser lens (not shown) is converted into a linearly polarized light by a polarization plate 16 and passes through a half mirror 17 and further converted into circularly polarized light by a quarter-wave ($\lambda/4$) plate 15. The circularly polarized light passes through the dichroic mirror 13 and is converged by the objective lens 12. Specifically, the converged laser light enters the optical information recording medium 21 through the incidence/exit surface A, and then passes through the first substrate 5 and reaches the holographic recording layer 4 where optical information is recorded by means of an interference pattern formed by information light and reference light. The laser light further passes through the holographic recording layer 4 and then reflected by the filter layer 6 before reaching the bottom of the filter layer 6. That is, the laser light does not reach the reflective layer 2. This is because, since the filter layer 6 comprises the three cholesteric liquid crystal layers having spiral pitches changed continually so as thereby to have the property of transmitting red light only. Otherwise, as long as getting the intensity of leakage laser light through the filter layer 6 down to 20%, even though the leakage laser light reaches the bottom of the filter layer and is reflected as return laser light, the return laser light is reflected within the filter layer 6 once again. Therefore, the light intensity of the return laser light possibly blending in with the reproducing reference light is less than 4% (20% x 20%), the leakage laser light has substantially less adverse effect on the reproducing laser light.

EXAMPLE 2

Figure 11 schematically shows the construction of an optical information recording medium 22 according to second example 2 which is the same in structure as that of first example 1 except for a filter layer 6.

The filter layer 6 serves to transmit red light only and to reflect the remaining components of light such as green light and blue light. Therefore, the filter layer 6 prevents both information-bearing light and reference light entering the optical information recording medium 22 through an incidence/exit surface A returns and comes out from the incidence/exit surface A taking a reverse way.

The filter layer 6 comprises a colour material contained layer and a dielectric deposition layer formed on the

colour material contained layer. The dielectric deposition layer is a lamination of seven thin dielectric films different in refractivity from one another. The dielectric deposition layer thus structured may be formed by coating the colour material contained layer and depositing the dielectric layer directly on the first gap layer 8 or, otherwise, may be formed in the form of a film which comprises the colour material contained layer and the dielectric layer formed on a substrate and is attached onto the first gap layer 8. By virtue of a combination of the colour material contained layer and the dielectric layer, the filter layer 6 is adapted to have a reflectivity higher than 50% for incoming light of a wavelength of 655 nm and a reflectivity higher than 30% for incoming light of a wavelength of 532 nm, both at an incident angle of $\pm 40^{\circ}$. Therefore, the filter layer 6 is prevented from causing a shift of selectively reflective wavelength even though an incident angle of light varies. The optical information recording medium 22 may be disk-shaped or card-shaped and is formed in the same manner as example 1.

Referring to Figure 13, similar to the optical information recording medium 21, servo laser light (in this case, red laser light) that emanates from a laser source (not shown) and is collimated by a condenser lens (not shown) is almost completely reflected by a dichroic mirror 13 and focused on the reflective layer 2 by an objective lens 12. The dichroic mirror 13 takes the form of beam splitting means for reflecting red light only and transmitting green or blue light. The laser light entering the incidence/exit surface A of the optical recording medium 21 sequentially passes through the first substrate 5, the holographic recording layer 4, the second gap layer 7, the filter layer 6 and the first gap layer 8 and then impinges on and is reflected by the reflective layer 2. The laser light reflected by the reflective layer 2 returns taking a reverse way and comes out from the incidence/exit surface A. The laser light coming out from the optical recording medium 21 is completely reflected by the dichroic mirror 13 and then detected by a photo-sensor (not shown) serving as a servo information detector for detecting servo information used for servo control including at least focusing servo, tracking servo and slide servo. Similar to the optical information recording medium 21, since the holographic recording layer 4 is not sensitive to red light, the holographic recording layer 4 is not affected by the laser light passing therethrough and stray laser light reflected diffusely by the reflective layer 2.

On the other hand, laser light, information-bearing light or reference light, (in this case, green or blue laser light) emanating from a laser source 18 controlled by a digital light processor (DLP) combined with the laser source 18 and collimated by a condenser lens (not shown) is converted into a linearly polarized light by a polarization plate 16 and passes through a half mirror 17 and further converted into circularly polarized light by a quarter-wave ($\lambda/4$) plate 15. The circularly polarized light passes through the dichroic mirror 13 and is converged by the objective lens 12. Specifically, the converged laser light enters the optical information recording medium 21 through the incidence/exit surface A, and then passes through the first substrate 5 and reaches the holographic recording layer 4 where optical information is recorded by means of an interference pattern formed by information light and reference light. The laser light further passes through the holographic recording layer 4 and then reflected by the filter layer 6 before reaching the bottom of the filter layer 6. That is, the laser light does not reach the reflective layer 2. This is because, since the filter layer 6 comprises a combination of the colour material contained layer and the dielectric deposition layer so as thereby to have the property of transmitting red light only. Otherwise, as long as getting the intensity of leakage laser light through the filter layer 6 down to 20%, even though the leakage laser light reaches the bottom of the filter layer and is reflected as return laser light, the return laser light is reflected within the filter layer 6 once again. Therefore, the light intensity of the return laser light possibly blending in with the reproducing reference light is less than 4% (20% x 20%), the leakage laser light has substantially less adverse effect on the reproducing laser light.

Hereafter, working examples of the present invention will be nonexclusively described.

## WORKING EXAMPLE 1

An optical information recording medium of working example 1 (WE 1) comprises a lamination made up of a first substrate, a holographic recording layer, a filter layer, first gap layer and a second substrate arranged in this order. The holographic recording layer is formed in the form of sheet, and the filter layer is formed in the form of film.

-Preparation of holographic recording sheet-

The recording sheet was prepared and punched out in a disk-shape by the punch-cutting method shown in Figure 2. A solution of a photosensitive composition was coated on a base made from a triacetylcellulose film (Fujitac: trade name of Fuji Photo Film Co., Ltd,) of 75 μm in thickness by a bar coater so as to form a recording layer 500 μm in dry thickness. Subsequently, the recording layer was dried and cured at 80°C for 40 minutes in a hot air circulating dehydrator. The recording layer was peeled off from the base with fingers and then punched out using a punch-cutting die to provide a disk-shaped recording sheet 115 mm in diameter and 500 μm in thickness having a centre spindle hole 37 mm in inner diameter. The photosensitive composition was prepared as follows.
Di(urethanacrylate)olygomer: (ALU-351: Echo Resins Corporation): 59 parts by mass
Isobornyl acrylate: 30 parts by mass

Vinyl benzoate: 10 parts by mass
Polymerization initiator (Irgacure 784: Ciba Specialty Chemicals K.K.): 1 part by mass

-Preparation of filter-

A base film was prepared by coating a solution of polyvinyl alcohol (MP203: Kuraray Co., Ltd.) on a polycarbonate film (Iupilon: Mitsubishi Gas Chemical Company, Inc.) 100 μm in thickness so as to form a layer of polyvinyl alcohol 1 μm in thickness. The polyvinyl alcohol layer was provided with liquid crystal molecular orientation ability by passing the base film through a rubbing machine.

Separately, coating liquids of cholesteric liquid crystal A, B and C having the following compositions were prepared in a common manner.

| Component | Coating liquid of cholesteric liquid crystal (part by mass) | | |
|---|---|---|---|
| | A | B | C |
| UV polymerizable liquid crystal | 93.16 | 94.02 | 94.74 |
| Chiral compound | 6.84 | 5.98 | 5.26 |
| Photopolymerization Initiator | 0.10 | 0.10 | 0.10 |
| Sensitizer | 0.02 | 0.02 | 0.02 |
| Solvent | 400 | 400 | 400 |

*UV polymerizable liquid crystal: PALIOCOLOR LC242 (BASF)
* Chiral compound: PALIOCOLOR LC756 (BASF)
* Photopolymerization initiator: Irgacure 369 (Ciba Specialty Chemicals)
* Sensitizer: Diethyl thioxantine
* Methyl ethyl ketone

Subsequently, the base film was coated with the liquid of cholesteric liquid crystal A by a bar coater and was subjected to orientation-aging at 110˚C for 20 secs after drying. Thereafter, the base film was exposed to irradiation energy of 500 mJ/cm$^2$ provided by an ultra-high pressure mercury-vapour lamp at a temperature of 110˚C so as thereby to form a cholesteric liquid crystal layer A 2 μm in thickness. Similarly, the base film was coated with the liquid of cholesteric liquid crystal B by a bar coater and was subjected to orientation aging at 110˚C for 20 secs after drying. Thereafter, the base film was exposed to irradiation energy of 500 mJ/cm$^2$ provided by an ultra-high pressure mercury-vapour lamp at a temperature of 110˚C so as thereby to form a cholesteric liquid crystal layer B 2 μm in thickness over the cholesteric liquid crystal layer A. In just the same manner, the base film was coated with the liquid of cholesteric liquid crystal C so as to form a cholesteric liquid crystal layer C 2 μm in thickness over the cholesteric liquid crystal layer B. The filter prepared in this way was of a three layer structure comprising three cholesteric liquid crystal layers which have a function of circular polarized light separation, are different in the centre wavelength of selective reflection from one another and have the same clockwise or right-handed direction of spiral revolution of liquid crystal as one another.

-First substrate-

The first substrate was prepared by diversion of a 120 mm polycarbonate resin disk 0.6 mm in thickness commonly used for DVD-RW. The polycarbonate resin disk has a smooth surface without concavities and convexities such as patterned servo pits.

-Second substrate-

The second substrate was prepared by diversion of a 120 mm polycarbonate resin disk 0.6 mm in thickness commonly used for DVD-RW. The polycarbonate resin disk was provided with patterned servo pits formed at track pitches of 0.74 μm over its surface. The respective pits were 175 nm in depth and 300 nm in width. The second substrate was coated with aluminium (Al) so as to form a reflective layer over the patterned servo pits. Subsequently, a polycarbonate film 100 μm in thickness was adhered as a first gap layer to the reflective layer with an UV cure adhesive.

-Preparation of lamination-

These first substrate, recording sheet, filter and second substrate separately prepared were coated with an adhesive (Type GM-9002: Brenny Giken) so as not to allow bubbles to get into the adhesive and superimposed on one

another in this order so as thereby to form a lamination. Subsequently, the lamination was pressed down at a pressure of 0.08 Mpa in an atmosphere of 80˚C for 40 minutes, thereby completing an optical information recording medium.

-Evaluation of optical information recording medium and recording result-

The optical information recording medium, in which holograms were recorded with recording beams having a focused spot of 20 μm in diameter, was evaluated on sensitivity and multiplicity using the collinear holographic media evaluation system Model SHOT-1000 (Pulstec Industry Co., Ltd.), and besides productivity.

-Measurement of recording sensitivity-

The sensitivity measurement was made on the basis of a change in bit error rate (BER) of reproduced signals from the optical information recording medium in which holograms were multiplexed with varying irradiation energy. Usually, reproduced signals have a tendency to decline a bit error rate (BER) gradually following an increase in intensity of the reproduced signals due to an increase in irradiation energy. In this instance, lowest recording radiation energy necessary to reconstruct an almost satisfactory image which is defined by a bit error rate less than $10^{-3}$ was taken for the recording sensitivity of the optical information recording medium. As a result of the measurement, the irradiation energy for realizing a bit error rate less than $10^{-3}$ was 150 mJ/cm$^2$, and, consequentially, it was revealed that the recording sensitivity was 75 mJ/cm$^2$.

-Evaluation of multiplicity-

Evaluation was made on multiplicity of the optical information recording medium using the technique for shifting recording beam spots spirally which is described in ISOM' 04, Th-J-06, pages 184-185 (October, 2004). 169 holograms were recorded at regular pitches of 28.5 μm in the optical information recording medium. The 169$^{th}$ hologram was recorded on the 49$^{th}$ multiplexing. Since the multiplicity rises depending on an increase in the number of recorded holograms, the bit error rate rises depending on an increase in the number of recorded holograms if the optical information recording medium has only a poor multiplex characteristic. In this instance, the number of recorded holograms which turns out a bit error rate greater than $10^{-3}$ was pegged at multiplicity attribute M. By means of this technique, it was proved that the multiplicity attribute M of the optical information recording medium was 169 multiplex.

-Evaluation of productivity-

The productivity evaluation of the optical information recording medium was made based on a comprehensive study on effective availability of work force, goods and facilities, a length of production lead time (equipment investment turn over), adjustability to a high working-efficiency production line, an yield rate, uniformity of quality, etc. and assessed according to the following grade standards.

◎: Very effective on productivity
○: Effective on productivity
Δ: Poor in productivity
×: Unsuitable to productivity improvement

WORKING EXAMPLE 2

An optical information recording medium of working example 2 (WE 2) was prepared in the same way as that of working example 1 except for employing the fluid moulding by the use of a casting mould shown in Figure 3 in place of the punch-cutting method for preparing a recording sheet, and was evaluated on sensitivity, multiplicity and productivity thereof according to the same grade standards as for the working example 1.

-Preparation of recording sheet by casting mould-

A recording sheet was prepared by the use of a casting mould 35 having a disk-shaped mould cavity 35a equal in dimensions to a desired recording sheet, i.e. 120 mm in diameter and 500 μm in depth, and a round center boss 35b 22 mm in diameter and 500 μm in height. The casting mould 35 was made of SUS304 and finished by the use of, for example, NC milling cutter. A cast liquid having the same compositions as used for working example 1 was poured in the mould cavity 35a sufficiently enough to fill the mould cavity 35a. Then, excess cast liquid was removed with a putty knife so as to be level with a top surface of the casting mould 35. The photosensitive composition liquid was at a viscosity

of 330 mPa·s at a temperature between 30 and 40°C.

WORKING EXAMPLE 3

An optical information recording medium of working example 3 (WE 3) was prepared in the same way as that of working example 1 except for employing the slicing method shown in Figure 4 in place of the punch-cutting method for preparing a recording sheet, and was evaluated on sensitivity, multiplicity and productivity thereof according to the same grade standards as for the working example 1.

-Preparation of recording sheet by slicing-

A recording sheet was prepared by slicing a cylindrical a cylindrical rod material made of the same photosensitive composition as used for working example 1 into recording sheets 500 μm in thickness. The cylindrical rod material 120 mm in diameter and 100 mm in length was prepared by filling a liquid of the photosensitive composition in a cylindrical casting mould having a core mandrel in vacuum so as to prevent it producing bubbles therein and curing it at a high temperature in the same manner as used for working example 1. The photosensitive composition liquid was at a viscosity of 330 mPa·s at a temperature between 30 and 40°C.

The cured cylindrical rod material was pulled out from the cylindrical casting mould and, then, sliced into thin sheets 500 μm in thickness by the slicing device Model SL360 (Delonghi Corporation) so as thereby to prepare recording sheets having center spindle holes 20 mm in diameter.

WORKING EXAMPLE 4

An optical information recording medium of working example 4 (WE 4) was prepared in the same way as that of working example 1 except for employing the spacer-sealed laminating method shown in Figure 5 in place of the punch-cutting method for preparing a recording sheet, and was evaluated on sensitivity, multiplicity and productivity thereof according to the same grade standards as for the working example 1. The usage of the annular spacers provides significant improved accuracy of thickness of the lamination, and besides providing a precise optical information recording medium having a fine thickness and, furthermore, offering the advantage that the optical information recording medium is protected from infiltration of water and harmful gases and aridity of the holographic recording layer.

That is, as shown in Figure 5, after placing an outer annular spacer 120 mm in outer diameter, 115 mm in inner diameter and 500 μm in thickness and an inner annular spacer 37 mm in outer diameter, 22 mm in inner diameter and 500 μm in thickness on a second substrate 1 having a center spindle hole 1a, a holographic recording sheet 32 having a thickness of 500 μm and having a center spindle hole 32a that was prepared in the manner shown in Figure 1 was fitted in between the outer annular spacer 37 and the inner annular spacer 38, and then a first substrate 5 having a center spindle hole 5a was attached to the outer and the inner annular spacers 37 and 38. Outer surfaces of the first and second substrates 5 and 1 and the outer annular spacer 37, and inner surfaces of the center spindle holes 5a and 1a of the first and second substrates 5 and 1 and the inner annular spacer 38 were fitly aligned with an alignment accuracy within a displacement less than 100 μm. The lamination thus prepared was integrated by pressure bonding under a pressure of 0.08 Mpa at a temperature of 80°C.

COMPARATIVE EXAMPLE 1

An optical information recording medium of comparative example 1 (CE 1) was prepared in the same way as that of working example 1 except for employing a conventional manner in which a fluid of photosensitive composition is poured into a cavity defined by outer and inner spacers on a second substrate, and was evaluated on sensitivity, multiplicity and productivity thereof according to the same grade standards as for the working example 1.

The result of evaluations of the optical information recording media of WE1 to WE4 and CE1 is shown in the following table.

| | Method For Recording Layer Preparation | Sensitivity ($mJ/cm^2$) | Multiplicity M | Productivity |
|---|---|---|---|---|
| WE 1 | Punch-cutting | 70 ~ 80 | 150 | ◎ |
| WE 2 | Fluid moulding | 70 ~ 80 | 150 | ○ |
| WE 3 | Rod slicing | 70 ~ 80 | 150 | ◎ |
| WE 4 | Spacer-sealed lamination | 70 ~ 80 | 150 | ◎ |
| CE 1 | Conventional | 70 ~ 80 | 100 | Δ |

As apparent from the table above, it is proved that the optical information recording media of working examples 1 to 4 (WE1 to WE4) are surpass in productivity and stability of quality as compared with the optical information recording medium of comparative example (CE1).

While the exemplary embodiments described above are presently preferred, it should be understood that the embodiments are offered by way of example only. Accordingly, the present invention is not limited to a particular embodiment, but extends to various modifications that nevertheless fall within the scope of the appended claims.

## Claims

**1.** A method for manufacturing an optical information recording medium having a holographic recording layer between a first substrate and a second substrate in which optical information is holographically recorded, comprising the steps of:

preparing a first substrate and a second substrates each of which is shaped in the form of a disk having a spindle hole;
forming a disk-shaped recording sheet having a spindle hole which comprises a holographic recording layer; and
forming a lamination of said disk-shaped recording sheet between said first substrate and said second substrate.

**2.** A method for manufacturing an optical information recording medium as defined in claim 1, wherein said disk-shaped recording sheet is prepared by punching out a support on which a lamination of a plurality of said holographic recording layers are formed into a disk having a spindle hole.

**3.** A method for manufacturing an optical information recording medium as defined in claim 1, wherein said disk-shaped recording sheet is prepared by casting a liquid of photosensitive composition material into a casting mould having a core mandrel and curing said liquid of photosensitive composition material in said moulding cavity.

**4.** A method for manufacturing an optical information recording medium as defined in claim 1, wherein said disk-shaped recording sheet is prepared by forming a cylindrical rod of photosensitive composition material having a centre bore and slicing said cylindrical rod of photosensitive composition material into disk recording sheets.

**5.** A method for manufacturing an optical information recording medium as defined in any preceding claim, and further comprising the step of fitting said disk-shaped recording sheet between an annular outer spacer and an annular inner spacer before forming said lamination.

**6.** An optical information recording medium for holographically recording optical information in a holographic recording layer, comprising:

a disk-shaped first substrate having a spindle hole;
a disk-shaped second substrate having a spindle hole; and
a disk-shaped recording sheet having a spindle hole which comprises a holographic recording layer;

wherein said disk-shaped recording sheet is laminated between said first substrate and said second substrate.

**7.** An optical information recording medium as defined in claim 6, wherein said disk-shaped recording sheet is prepared by punching out a support on which a lamination of a plurality of said holographic recording layers are formed into a disk having a spindle hole.

**8.** An optical information recording medium as defined in claim 6, wherein said disk-shaped recording sheet is prepared by casting a liquid of photosensitive composition material into a casting mould having a core mandrel and curing said liquid of photosensitive composition material in said moulding cavity.

**9.** An optical information recording medium as defined in claim 6, wherein said disk-shaped recording sheet is prepared by forming a cylindrical rod of photosensitive composition material having a centre bore and slicing said cylindrical rod of photosensitive composition material into disk sheets.

**10.** An optical information recording medium as claimed in any of claims 6 to 9, and further comprising an annular outer spacer and an annular inner spacer between which said disk-shaped recording sheet is fitted in.

**11.** An optical information recording medium as claimed in any of claims 6 to 10, and further comprising a filter layer formed between said second substrate and said disk-shaped recording sheet.

**12.** An optical information recording medium as claimed in any of claims 6 to 11, wherein said disk-shaped recording sheet has a thickness in a range of from 100 to 2,000 μm.

**13.** An optical information recording medium as claimed in any of claims 6 to 12, said optical information recording medium being used with collinear image-bearing and reference beams.

Fig. 1

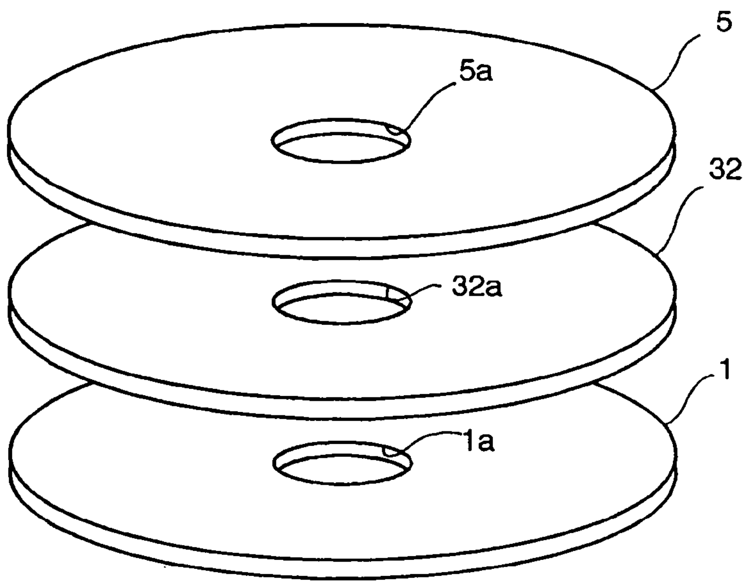


Fig. 2

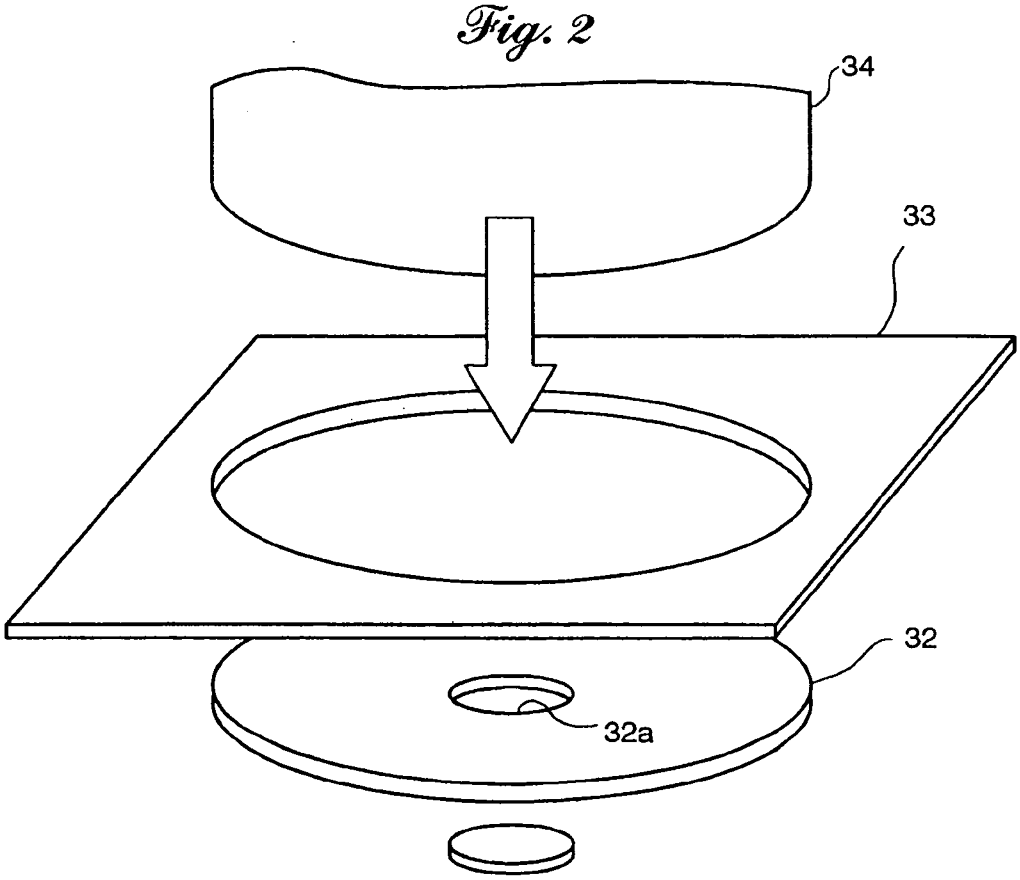

Fig. 3

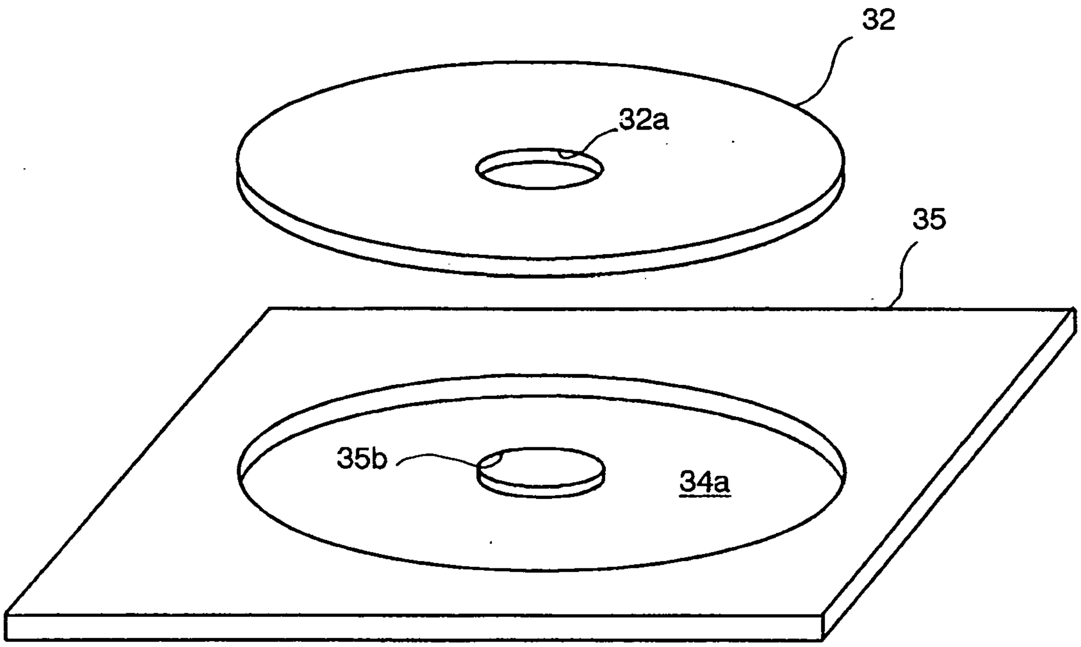


Fig. 4

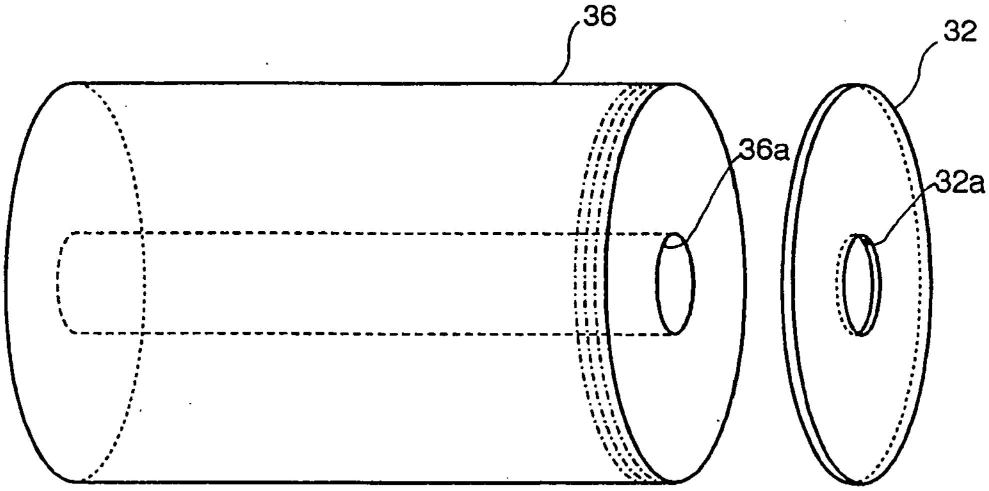

*Fig. 5*

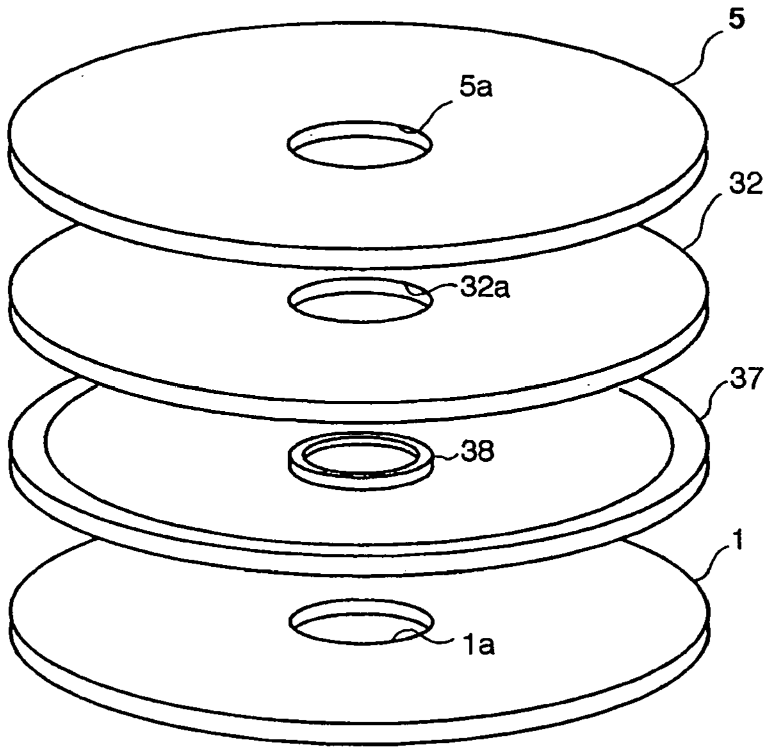


*Fig. 6*

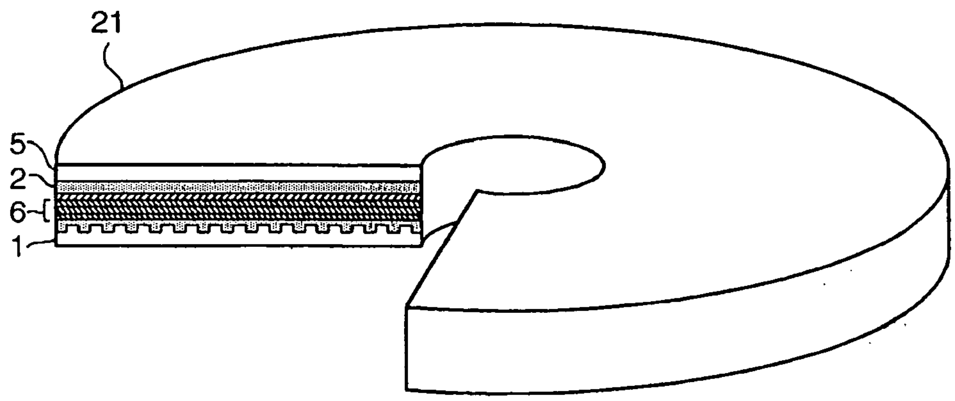

*Fig. 7*

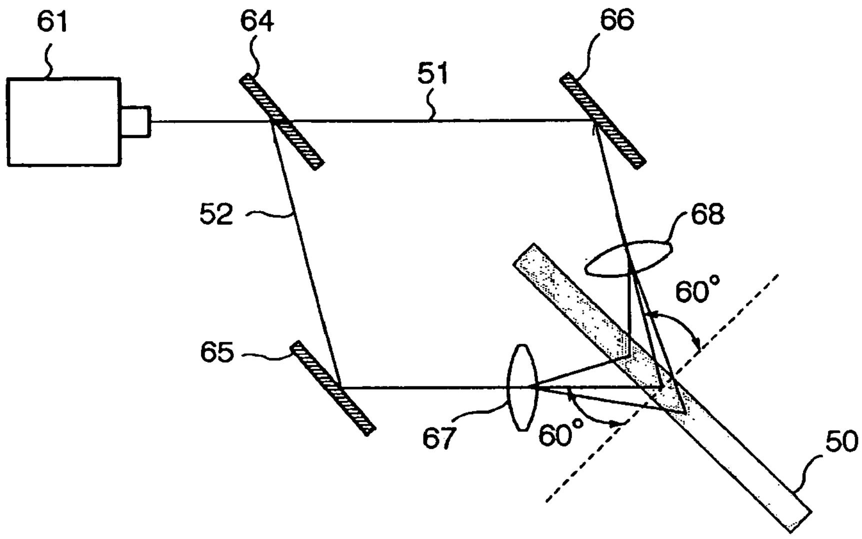


*Fig. 8*

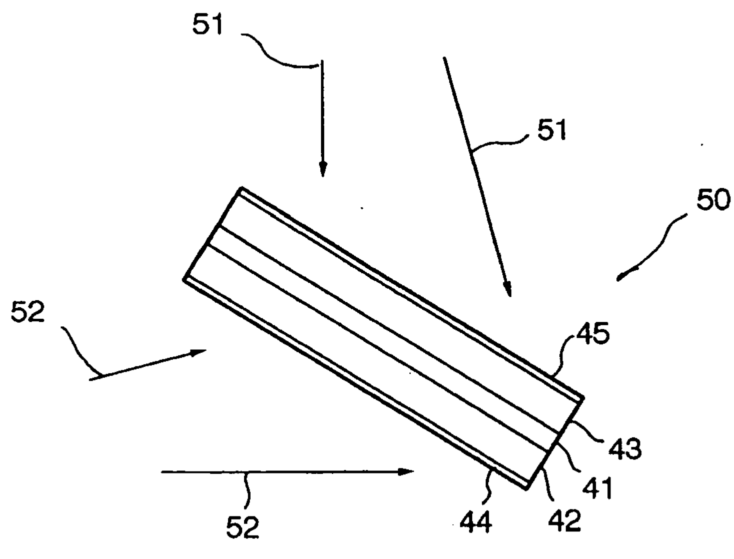

Fig. 9

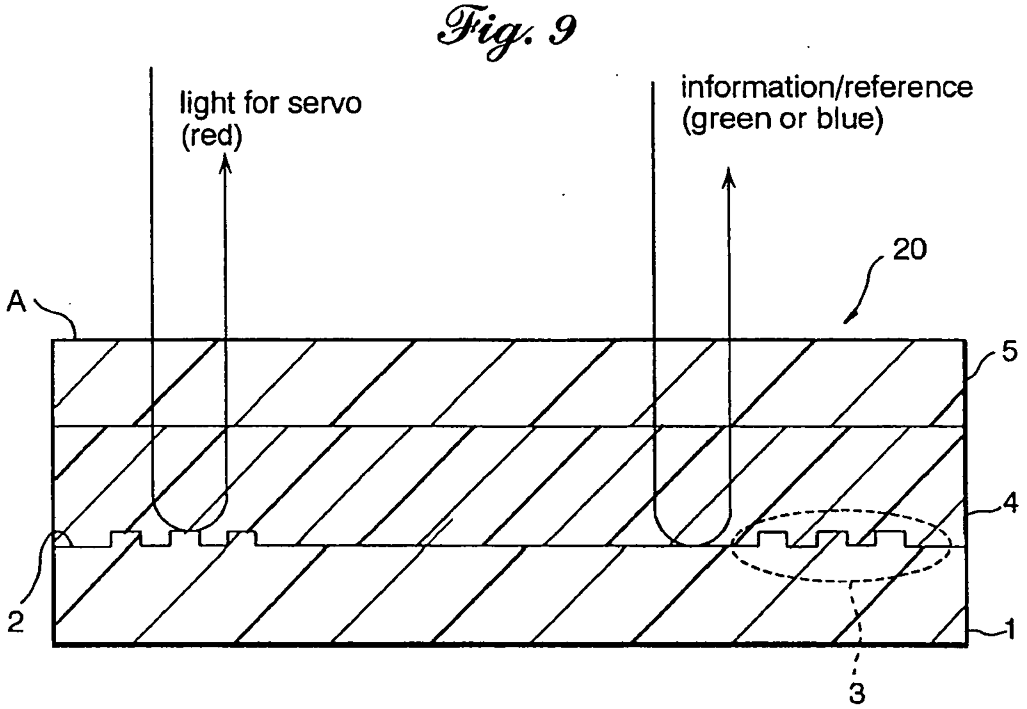
light for servo
(red)
information/reference
(green or blue)
20
A
5
4
2
1
3

Fig. 10

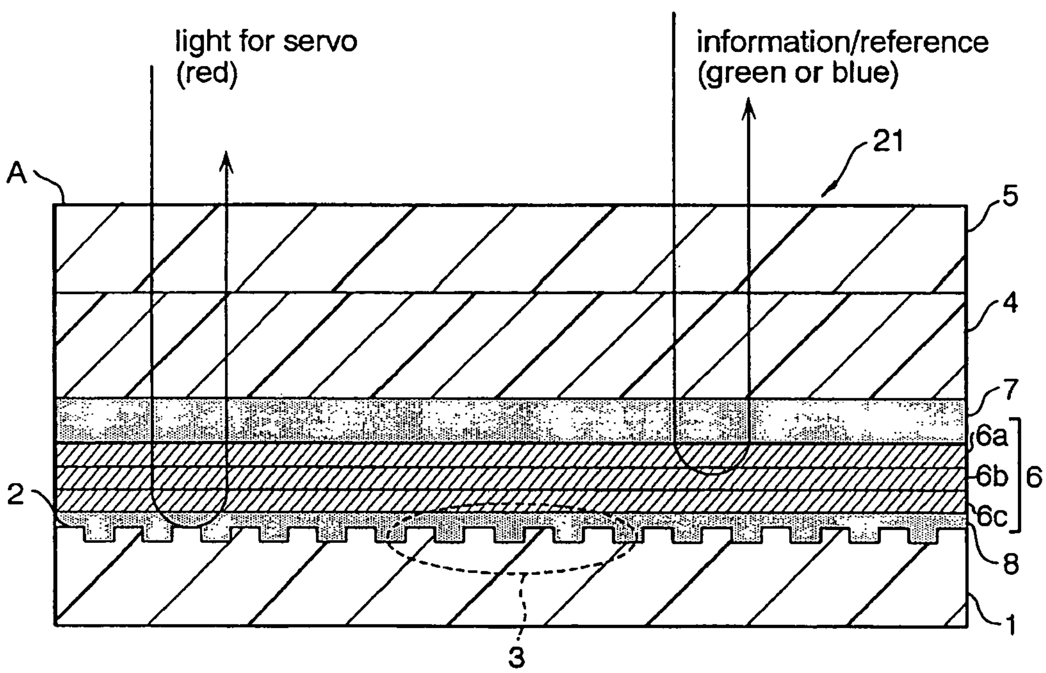
light for servo
(red)
information/reference
(green or blue)
21
A
5
4
7
6a
6b
6
6c
2
8
1
3

Fig. 11

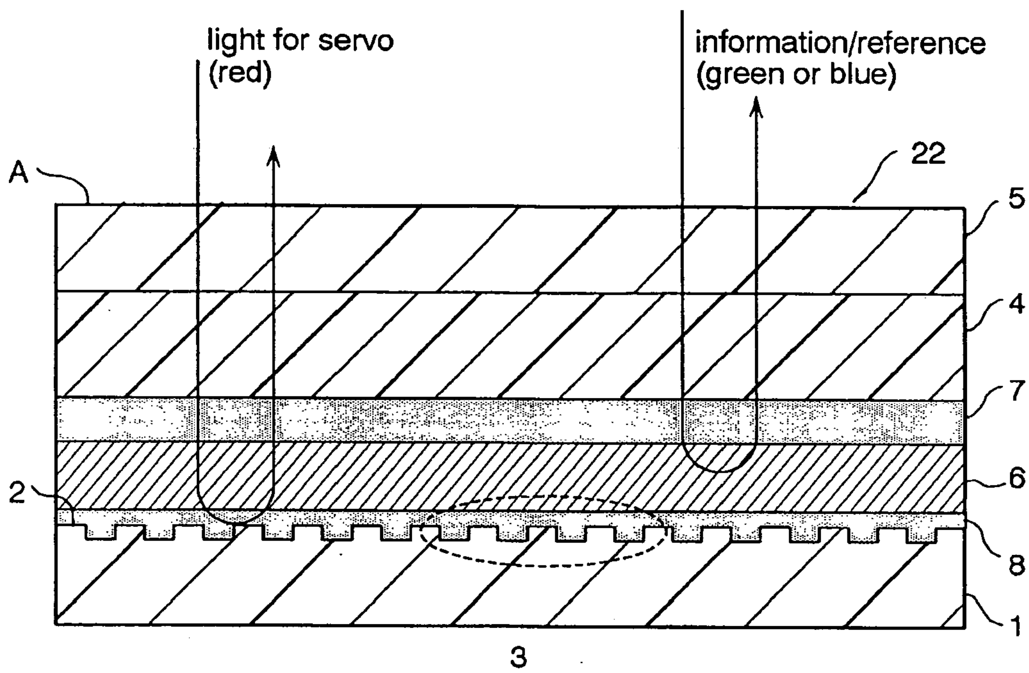
light for servo
(red)
information/reference
(green or blue)
A
22
5
4
7
6
2
8
1
3

Fig. 12

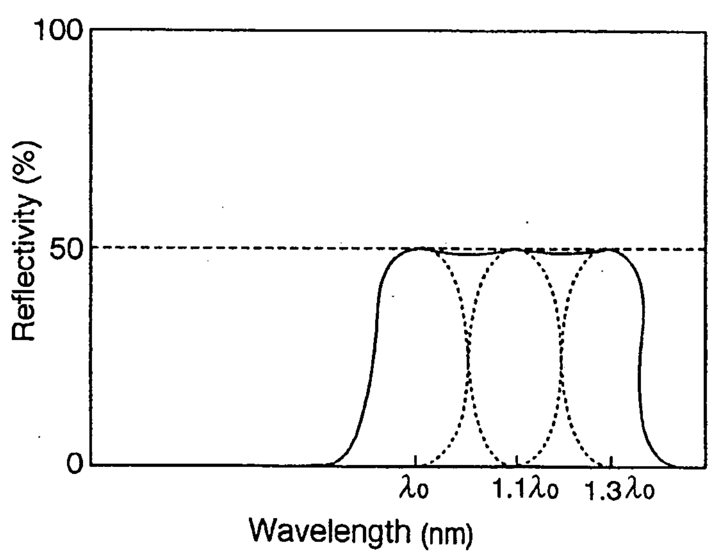
100
50
0
Reflectivity (%)
λo
1.1λo
1.3λo
Wavelength (nm)

Fig. 13

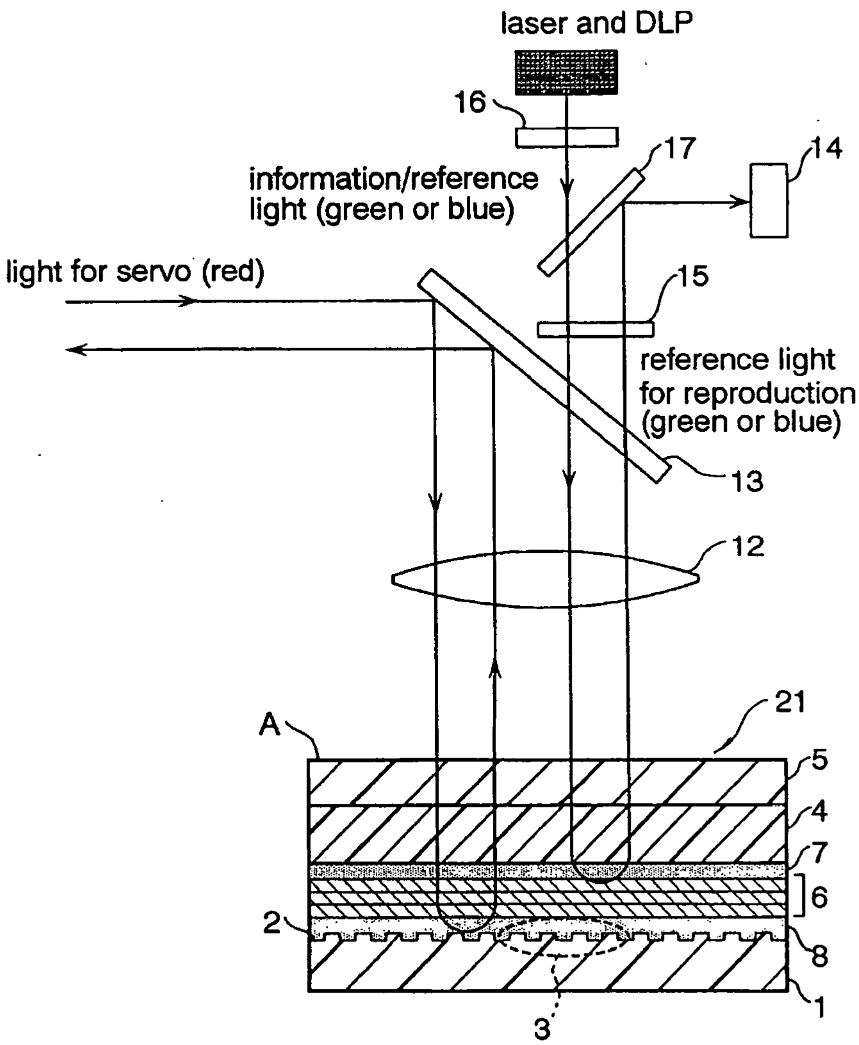
laser and DLP
16
17
14
information/reference
light (green or blue)
light for servo (red)
15
reference light
for reproduction
(green or blue)
13
12
A
21
5
4
7
6
2
8
1
3

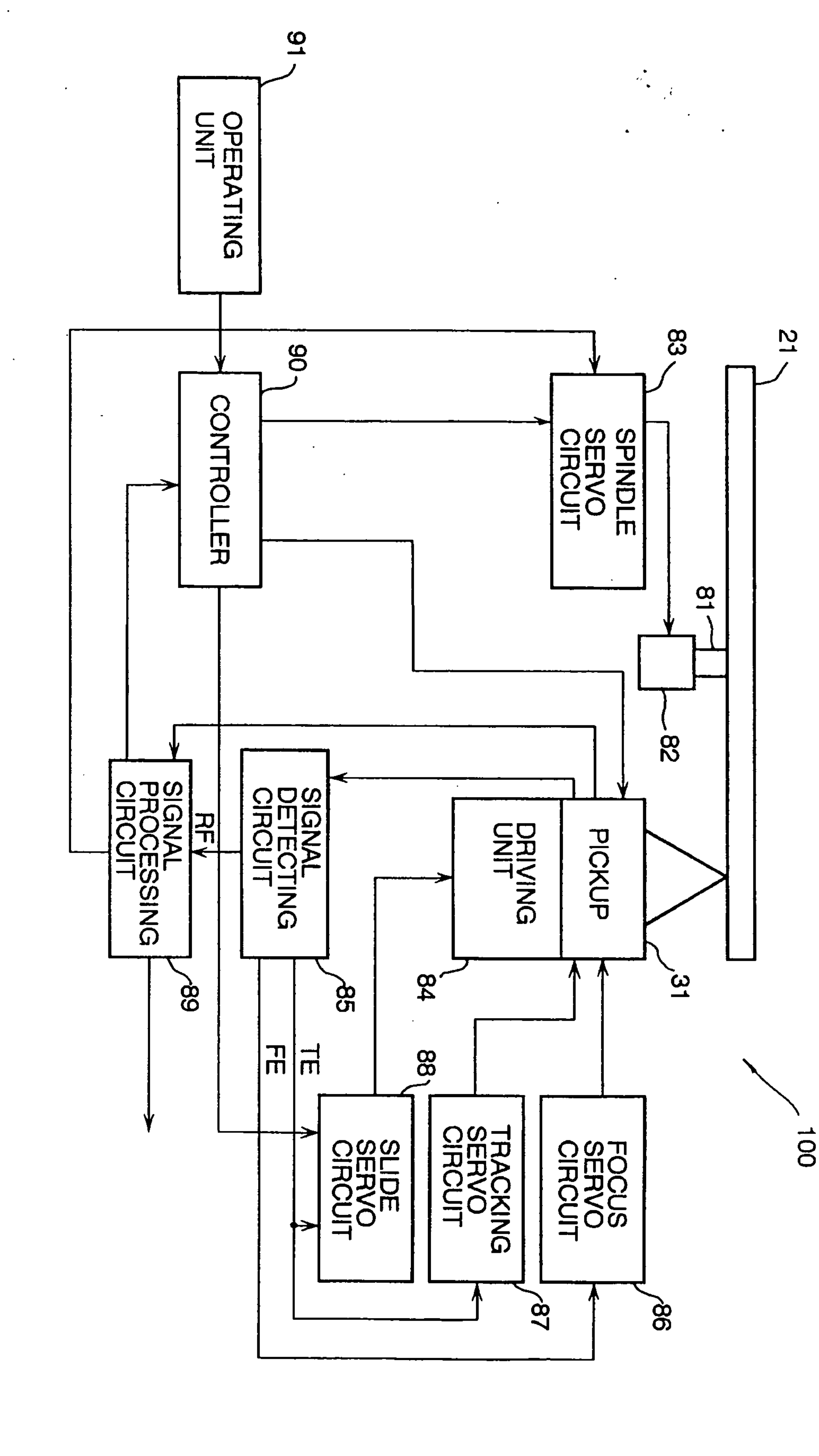

91
OPERATING UNIT
90
CONTROLLER
83
SPINDLE SERVO CIRCUIT
21
81
82
PICKUP
DRIVING UNIT
31
84
SIGNAL DETECTING CIRCUIT
85
SIGNAL PROCESSING CIRCUIT
89
RF
TE
FE
SLIDE SERVO CIRCUIT
88
TRACKING SERVO CIRCUIT
87
FOCUS SERVO CIRCUIT
86
100


Fig. 14

European Patent Office

# EUROPEAN SEARCH REPORT

Application Number
EP 06 25 4506

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br>A | US 2004/240010 A1 (TAKEYAMA TOSHIHISA [JP]) 2 December 2004 (2004-12-02)<br>* paragraphs [0124] - [0126]; figures 3a-3j,12e * | 1,6<br>2-4, 7-10,12, 13 | INV.<br>G11B7/26<br>G11B7/24<br>G11B7/252<br>G11B7/0065 |
| X | US 2004/165235 A1 (EDWARDS JATHAN D [US] ET AL) 26 August 2004 (2004-08-26)<br>* paragraph [0037]; figure 5 * | 6 | |
| X | EP 1 460 622 A (TDK CORP [JP]) 22 September 2004 (2004-09-22)<br>* paragraphs [0042] - [0047]; figures 3,4 * | 6,11 | |
| A | US 2004/190093 A1 (MATSUI NORIE [JP] ET AL) 30 September 2004 (2004-09-30)<br>* paragraph [0046]; figures 1,2 * | 1,6 | |
| P,X | US 2006/077875 A1 (INOUE NORIKO [JP] ET AL) 13 April 2006 (2006-04-13)<br>* paragraph [0056]; figures 3,4 * | 1,6 | |

| TECHNICAL FIELDS SEARCHED (IPC) |
|---|
| G11B |

The present search report has been drawn up for all claims

| Place of search | Date of completion of the search | Examiner |
|---|---|---|
| Munich | 19 December 2006 | Chaumeron, Bernard |

2

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT ON EUROPEAN PATENT APPLICATION NO. EP 06 25 4506

This annex lists the patent family members relating to the patent documents cited in the above-mentioned European search report.
The members are as contained in the European Patent Office EDP file on
The European Patent Office is in no way liable for these particulars which are merely given for the purpose of information.

19-12-2006

| Patent document cited in search report | Publication date | Patent family member(s) | Publication date |
|---|---|---|---|
| US 2004240010 A1 | 02-12-2004 | EP 1628297 A1 | 22-02-2006 |
| | | JP 2004354586 A | 16-12-2004 |
| | | WO 2004107334 A1 | 09-12-2004 |
| US 2004165235 A1 | 26-08-2004 | NONE | |
| EP 1460622 A | 22-09-2004 | CN 1530772 A | 22-09-2004 |
| | | JP 2004280972 A | 07-10-2004 |
| | | US 2004184122 A1 | 23-09-2004 |
| US 2004190093 A1 | 30-09-2004 | JP 2004287264 A | 14-10-2004 |
| | | US 2006092488 A1 | 04-05-2006 |
| US 2006077875 A1 | 13-04-2006 | JP 2006085771 A | 30-03-2006 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2002123949 A
- JP 11311936 A
- JP 2004029476 A
- US 4942112 A
- US 4959284 A
- US 5759721 A
- US 6221536 B
- WO 9713183 A
- WO 9744714 A
- WO 9926112 A
- JP 2849021 B
- JP 2873126 B
- JP 2880342 B
- JP 3057082 B
- JP 3161230 B
- JP 2000275859 A
- JP 2001316416 A
- JP 58015603 A
- JP 58040302 A
- JP 59028328 A
- JP 60053300 A
- JP 61009621 A
- JP 62003842 A
- JP 59089303 A
- JP 60060104 A
- JP 2005084780 A
- JP 2006162814 A
- JP 47010537 A
- JP 58111942 A
- JP 58212844 A
- JP 59019945 A
- JP 59046646 A
- JP 59109055 A
- JP 63053544 A
- JP 3610466 B
- JP 4226187 B
- JP 48030492 A
- JP 48031255 A
- JP 48041572 A
- JP 48054965 A
- JP 50010726 A
- US 2719086 A
- US 3707375 A
- US 3754919 A
- US 4220711 A


### Non-patent literature cited in the description


- Photopolymer Handbook. Kogyou Chosakai Publishing Co., Ltd, 1989
- Photopolymer Technology. Daily Industrial Newspapers, 1989
- *SPIE Proceedings,* 1997, vol. 3010
- *Society of Photo-Optical Instrumentation Engineers (SPIE,* 1998, vol. 3291
- *Research Disclosure,* December 1980, vol. 200
- Initiator. Kodansha Ltd, 1987, 160-163
- Chemistry of Functional Dyes. CMC Publishing, 1981, 393-416
- *Colour Materials,* 1987, vol. 60 (4), 212-224
- *ISOM' 04,* October 2004, vol. 169, 184-185